# EUROPÄISCHE PATENTSCHRIFT

(11) **EP 2 804 134 B1**
(45) Veröffentlichungstag und Bekanntmachung des Hinweises auf die Patenterteilung: **29.11.2017**
(21) Anmeldenummer: 14164693.5
(22) Anmeldetag: 15.04.2014
(51) Int. Cl.: G06N 5/04

(54) **Verfahren und System zur Fuzzy-basierten Regelung einer Zuordnung von Ressourcen in einem System**
Method and system for fuzzy-based control of an allocation of resources in a system
Procédé et système de réglage basé sur la logique floue d'une affectation de ressources dans un système

(30) Priorität: 14.05.2013 DE 102013008151
(43) Veröffentlichungstag der Anmeldung: 19.11.2014
(73) Patentinhaber: Deutsche Telekom AG, 53113 Bonn (DE)
(72) Erfinder: Wieland, Sabine, Prof., 04420 Makranstädt (DE)
(74) Vertreter: Blumbach Zinngrebe

(56) Entgegenhaltungen:
- EP-A1- 1 331 564
- US-A1- 2007 192 261
- JIA RAO ET AL: "DynaQoS: Model-free self-tuning fuzzy control of virtualized resources for QoS provisioning", QUALITY OF SERVICE (IWQOS), 2011 IEEE 19TH INTERNATIONAL WORKSHOP ON, IEEE, 6. Juni 2011 (2011-06-06), Seiten 1-9, XP031951069, DOI: 10.1109/IWQOS.2011.5931341 ISBN: 978-1-4577-0104-7
- Stefan Frey ET AL: "Fuzzy Controled QoS for Scalable Cloud Computing Services", CLOUD COMPUTING 2013 : The Fourth International Conference on Cloud Computing, GRIDs, and Virtualization, 1. Januar 2013 (2013-01-01), Seiten 150-155, XP055196136, ISBN: 978-1-61-208271-4 Gefunden im Internet: URL:http://www.thinkmind.org/index.php?vie w=article&articleid=cloud_computing_2013_6 _30_20107 [gefunden am 2015-06-16]
- Myint Myat Myo ET AL: "Efficient Resource Allocation for Green Cloud Data Center", 3rd International Conference on Computational Techniques and Artificial Intelligence (ICCTAI'2014), 11. Februar 2014 (2014-02-11), Seiten 67-73, XP055196125, Gefunden im Internet: URL:http://psrcentre.org/images/extraimage s/15 214367.pdf [gefunden am 2015-06-16]

## Beschreibung

Die Erfindung betrifft ein Verfahren und ein Fuzzy-Regelsystem zur Fuzzy-basierten Regelung einer Zuordnung von Ressourcen zu Softwareanwendungen, die eine Gruppe in einem System, insbesondere in einer Computer Cloud, wie eine Provider Cloud, Private Cloud, Public Cloud und/oder Rechenzentren, bilden.

Bei einem derartigen System werden einer Gruppe von Software-Anwendungen Ressourcen, üblicherweise über ein IT-Netzwerk, zur Verfügung gestellt, insbesondere über das Internet oder ein Intranet. Den einzelnen Software-Anwendungen können hierbei Systemressourcen zugeordnet werden, das heißt verschiedene einzelne Ressourcen des Systems im Rahmen einer Gesamtheit aller dem System zur Verfügung stehenden einzelnen Ressourcen, wobei für die nachfolgende Beschreibung und die Ansprüche diese Gesamtheit aller dem System zur Verfügung stehenden einzelnen Ressourcen als Systemkapazität bezeichnet wird. Ressourcen eines Systems können beispielsweise CPU (Central Processing Unit), RAM (Random Access Memory), HDD (Hard Disk Drive), Netzwerk-Bandbreite, Datenspeicher, Server, virtuelle Maschinen und/oder weitere Hard- und/oder Software sein.

Eine Gruppe von Software-Anwendungen ist beispielsweise einem oder mehreren Nutzern zugeordnet, bestimmt eine oder mehrere Kategorien von Software und/oder weist eine oder mehrere spezifische Eigenschaften zur Nutzung und/oder Anwendung einer oder mehreren Software-Anwendungen auf.

Als Stand der Technik sind selbstorganisierende Regler (Self Organisation Controller - SOC) bekannt. Beim selbstorganisierenden Regler wird eine initiale Menge von Regeln mit einem festen Performancemaß modifiziert. Das Performancemaß bestimmt die Abweichung zwischen Prozessein-und -ausgabe. Die mit dem Performancemaß ermittelten Ausgabeabweichungen müssen in Eingabekorrekturen umgesetzt werden. Bei der Regelmodifikation wird die Abweichung von der gewünschten Ausgabe ermittelt, indem die Reglerausgabe mit dem Performancemaß verglichen wird. Die für die Abweichung verantwortliche Regel wird ermittelt und entsprechend modifiziert, Alle anderen Regeln müssen an die Veränderung angepasst werden. Dies hat die Nachteile, dass bei einer Regelmodifikation die gesamte Regelbasis verändert wird. Wird die Modifikation wiederholt durchgeführt, kann die Regelbasis in einen früheren Zustand zurückkehren. Der Regler schwingt um einen Idealwert. Damit erfolgt sehr häufig eine Modifikation des Reglers mit geringem Optimierungspotential.

Aus der Veröffentlichung von JIA RAO ET AL, "DynaQoS: Model-free self-tuning fuzzy control of virtualized resources for QoS provisioning", QUALITY OF SERVICE (IWQOS), 2011 IEEE 19TH INTERNATIONAL WORKSHOP ON, IEEE, (20110606), doi:10.1109/IWQOS.2011.5931341, ISBN 978-1-4577-0104-7, pages 1 - 9, XP031951069 [X], ist eine zweischichtige Fuzzy-basierte Regelung der Zuordnung von virtuellen Ressourcen bekannt, bei der mehrere Fuzzy-basierte Vorrichtungen unterschiedliche Zielgrößen zu Ressourcenanfragen verarbeiten, die anschließend in einer Vorrichtung zu einer Ressourcenanfrage kumuliert werden.

Aufgabe der Erfindung ist es somit, ein System und ein Verfahren aufzuzeigen, welche eine verbesserte, insbesondere automatische, adaptive Regelung der Ressourcenzuordnung zu einer oder mehreren Software-Anwendungen auf der Grundlage momentaner Ressourcenanforderungen auch bei sich ändernden Zielfunktionen ermöglichen.

Eine bevorzugte Aufgabe der Erfindung ist es, verfügbare Ressourcen eines Systems im Rahmen einer für eine Gruppe von Software-Anwendungen zur Verfügung stehenden Systemkapazität zuzuordnen, um somit diese verfügbaren Ressourcen weitestgehend auszunutzen und zum anderen die zur Verfügung stehenden Ressourcen des Systems den Software-Anwendungen besonders vorteilhaft zuzuordnen.

Zur Lösung der Aufgabe schlägt die Erfindung ein Verfahren gemäß dem unabhängigen Anspruch 1 zur Fuzzy-basierten Regelung einer Zuordnung von Ressourcen eines Systems, insbesondere eines IT-Netzwerks, zu einer oder mehreren Software-Anwendungen, die eine Gruppe bilden, mit folgenden Schritten vor:
- Messen für jede Ressource einer aktuellen Ressourcen-Nutzung durch jede der Software-Anwendungen der Gruppe;
- Ermitteln mit einer ersten Fuzzy-basierten Vorrichtung eines momentanen Ressourcenauslastungswertes für jede Software-Anwendung der Gruppe in Abhängigkeit von deren aktueller Ressourcen-Nutzung in Bezug auf jede Ressource;
- Auswählen wenigstens einer Softwareanwendung mit einem höchsten momentanen Ressourcenauslastungswert;
- Ermitteln mit einer vierten Fuzzy-basierten Vorrichtung zumindest für jede ausgewählte Software-Anwendung eines Skalierungswertes in Abhängigkeit von deren momentanen Ressourcenauslastungswert, von einem mit einer zweiten Fuzzy-basierten Vorrichtung ermittelten Relevanzwert und von einem mit einer dritten Fuzzy-basierten Vorrichtung ermittelten Kritikalitätswert der ausgewählten Software-Anwendungen und einer Systemkapazität für die Gruppe,
mit dem Kriterium, dass die Nutzung aller Ressourcen durch alle Software-Anwendungen der Gruppe zumindest einen einstellbaren Schwellwert nicht überschreitet.

Nach dem erfindungsgemäßen Verfahren wird somit die aktuelle Nutzung jeder Ressource des Systems durch jede der Software-Anwendungen der Gruppe gemessen und ein momentaner Ressourcenauslastungswert für jede Software-Anwendung der Gruppe in Abhängigkeit von deren aktuellen Ressourcen-Nutzung einer jeden Ressource ermittelt.

Anschließend wird wenigstens eine Software-Anwendung, bevorzugt jedoch mehrere Software-Anwendungen, ausgewählt, für die der höchste momentane Ressourcenauslastungswert ermittelt wurde.

Diese eine oder mehreren ausgewählten Software-Anwendungen können anschließend basierend auf einem Skalierungswert durch Zuordnen von Ressourcen skaliert werden. Hierzu wird gemäß der Erfindung ein Skalierungswert für die wenigstens eine oder mehreren ausgewählten Software-Anwendungen ermittelt.

Unter einer Skalierung ist dabei die Steigerung oder Verringerung der Nutzung von Systemressourcen einer oder mehrerer Software-Anwendungen durch Zuordnen von Ressourcen zu verstehen, wobei unter einer Zuordnung von Ressourcen zu diesen Software-Anwendungen je nach Skalierungswert entweder Ressourcen zu diesen Software-Anwendungen hinzugefügt oder von diesen Software-Anwendungen abgezogen werden.

Insofern führt eine Erhöhung eines Skalierungswertes zu Steigerung von Ressourcen und eine Reduzierung eines Skalierungswertes zu einer Verringerung von Ressourcen.

Es sei darauf hingewiesen, dass ein Skalierungswert für unterschiedliche Software-Anwendungen identisch oder unterschiedlich sein kann.

Ein Skalierungswert für eine Software-Anwendung wird erfindungsgemäß zumindest für jede ausgewählte Software-Anwendung in Abhängigkeit von einem ermittelten momentanen Ressourcenauslastungswert jeder ausgewählten Software-Anwendung ermittelt. Des Weiteren wird der Skalierungswert in Abhängigkeit von einem Relevanzwert der ausgewählten Software-Anwendungen, von einem Kritikalitätswert dieser ausgewählten Software-Anwendungen sowie in Abhängigkeit von der Systemkapazität für die Gruppe von Software-Anwendungen ermittelt.

Der Relevanzwert für eine Software-Anwendung gibt ein Maß an, wie relevant der Betrieb bzw. der Einfluss, insbesondere momentan oder zukünftig, einer Software-Anwendung auf eine bestimmte Zielfunktion ist und fließt somit zweckmäßig gewichtend in die Ermittlung des Skalierungswertes ein. Diese Zielfunktion kann z.B. der Schwellwert sein.

Insbesondere wird der Relevanzwert in Abhängigkeit von einem anwendungsspezifischen Nutzungsverhalten einer Software-Anwendung ermittelt, beispielsweise von einem anwendungsspezifischen Tages- oder Wochenprofil und/oder der Uhrzeit. Ein niedriger Relevanzwert verringert somit zweckmäßig den Skalierungswert und ein hoher Relevanzwert erhöht somit zweckmäßig den Skalierungswert.
Der Kritikalitätswert gibt ein Maß an, wie kritisch der Betrieb einer Software-Anwendung ist und fließt somit zweckmäßig in die Ermittlung des Skalierungswertes gewichtend ein. Ein hoher Kritikalitätswert erhöht somit zweckmäßig den Skalierungswert und ein niedriger Relevanzwert verringert somit zweckmäßig den Skalierungswert.

Das Maß für die Kritikalität ist ferner bevorzugt in Abhängigkeit von einem anwendungsspezifischen Prioritätswert und/oder einem anwendungsspezifischen Sicherheitsrelevanzwert zu ermitteln.

Der Prioritätswert gibt einen relativen Bezug zwischen den einzelnen Software-Anwendungen durch Zuweisung von Prioritäten an. Der Sicherheitsrelevanzwert gibt ein Maß an, wie kritisch eine Software für die Sicherheit des Systems ist.

Beispielsweise kann eine Webanwendung, beispielsweise ein Lohnbuchhaltungsprogramm zur Monatsmitte eine höhere Priorität als eine Anwendung für eine Firewall aufweisen, welche jedoch eine hohe Sicherheitsrelevanz hat und welcher daher ein hoher Sicherheitsrelevanzwert zugewiesen ist.

Insofern sei auch darauf hingewiesen, dass die Grenzen zwischen den Variablen, die in einen Prioritätswert und einen Sicherheitsrelevanzwert, insbesondere jedoch auch in einen Relevanzwert und einen Kritikalitätswert eingehen, fließend sein können, da sich diese Werte auch gegenseitig beeinflussen können. Beispielsweise kann eine Softwareanwendung zeitabhängig mehr oder weniger relevant, wie beispielsweise bei einer Lohnbuchhaltungsanwendung, und/oder kritisch einzustufen sein, wie beispielsweise das Starten einer Firewall- oder Virenscanner-Anwendung.

Die erfindungsgemäß vorgeschlagene Fuzzy-basierte Regelung, welche Ein- und Ausgangswerte mit linguistischen, jeweils Fuzzy-Sets enthaltenden Variablen beschreibt, ermöglicht eine Verknüpfung der Variablen derart, dass hierdurch eine automatische Optimierung der Ressourcenzuordnung von einer oder mehreren, eine Gruppe bildenden Software-Anwendungen auch bei verschiedenen, konkurrierenden Parametern und sich ändernden Zielfunktionen vorgenommen werden kann, z.B. wenn Software-Anwendungen zu verschiedenen Zeiten unterschiedliche Prioritäten aufweisen.

Ein wesentlicher Vorteil ist es, dass die Ermittlung eines Skalierungswertes zur Regelung der Ressourcenzuordnung zu einer oder mehreren ausgewählten Software-Anwendungen, welcher beispielsweise eine Initialisierung des Skalierens der ausgewählten Software-Anwendung und/oder des Startens einer oder mehrerer virtueller Maschinen (VM) definiert, nicht nur von aktuellen Parametern der ausgewählten Software-Anwendung und einer hierauf basiert ermittelten, zu dieser ausgewählten Software-Anwendung gehörenden Zielfunktion abhängt, sondern zusätzlich zumindest eine Zielfunktion in Bezug auf eine Gesamtressourcennutzung der Gruppe der Software-Anwendungen, insbesondere in Form eines einstellbaren Schwellwertes, Berücksichtigung findet. Des Weiteren kann durch entsprechende Skalierung einer ausgewählten Software-Anwendung die Aktivität dieser ausgewählten Software-Anwendung innerhalb eines aktuellen Gesamtressourcennutzungs-Profils zeitlich oder räumlich in einen Bereich geringerer Auslastung verschoben, und also die Gesamtressourcen-Nutzung gesenkt und Lastspitzen vermieden werden, ohne die Funktionalität der ausgewählten Software-Anwendung(en) für einen Nutzer zu beeinträchtigen.

Entsprechend schlägt die Erfindung gemäß dem unabhängigen Anspruch 2 auch ein Fuzzy-Regelsystem zur Regelung einer Zuordnung von Ressourcen eines Systems, insbesondere eines IT-Netzwerks, zu einer oder mehrerer Software-Anwendungen, die eine Gruppe bilden, vor, mit einer ersten Fuzzy-basierten Vorrichtung, die dazu ausgebildet ist, für jede Software-Anwendung in Abhängigkeit von einer Messung für jede Ressource einer aktuellen Ressourcen-Nutzung durch jede der Software-Anwendungen der Gruppe, insbesondere in Abhängigkeit von einem CPU-Wert, einem CPU-Delta-Wert, einem RAM-Wert, einem RAM-Delta-Wert, einem HDD-Wert, einem HDD-Delta-Wert, einem Netzwerk-Wert und/oder einem Netzwerk-Delta-Wert, einen momentanen Ressourcenauslastungswert zu ermitteln.

Das Fuzzy-Regelsystem umfasst, beispielsweise in der ersten Fuzzy-basierten Vorrichtung, eine Auswahleinrichtung, um wenigstens eine Software-Anwendung mit einem höchsten momentanen Ressourcenauslastungswert auszuwählen.

Das Fuzzy-Regelsystem umfasst ferner eine zweite Fuzzy-basierte Vorrichtung, die dazu ausgebildet ist, für jede Software-Anwendung in Abhängigkeit von einem Nutzungsverhalten, insbesondere in Abhängigkeit von der Uhrzeit, einem Tagesnutzungsprofil und/oder einem Wochennutzungsprofil, einen Relevanzwert zu ermitteln, und eine dritte Fuzzy-basierte Vorrichtung, die dazu ausgebildet ist, zumindest für die eine ausgewählte Software-Anwendung in Abhängigkeit von einem dazugehörenden Prioritätswert und von einem Sicherheitsrelevanzwert einen Kritikalitätswert zu ermitteln,

sowie eine vierte Fuzzy-basierten Vorrichtung, die dazu ausgebildet ist, aus den momentanen Ressourcenauslastungswerten der ausgewählten Software-Anwendungen, dem Relevanzwert der ausgewählten Software-Anwendungen, dem Kritikalitätswert der ausgewählten Software-Anwendungen, und der Systemkapazität für die Gruppe einen Skalierungswert zumindest für ausgewählte Software-Anwendungen der Gruppe zu ermitteln, mit dem Kriterium, dass die Nutzung aller Ressourcen durch alle Software-Anwendungen der Gruppe einen einstellbaren Schwellwert nicht überschreitet,

Grundsätzlich können die Fuzzy-basierten Vorrichtungen des erfindungsgemäßen Systems zur Durchführung des erfindungsgemäßen Verfahrens Teil eines einzigen Fuzzy-Reglers sein. Da dieser dann jedoch je nach einbezogenen Software-Anwendungen innerhalb der Gruppe von Software-Anwendungen komplex und aufwendig aufgebaut ist und gegebenenfalls anwendungsspezifisch auch langsamer als separate, jedoch miteinander verknüpfte Fuzzy-Regler ist, ist erfindungsgemäß vorgesehen, die erste Fuzzy-basierte Vorrichtung als einen ersten separaten Fuzzy-Regler, die zweite Fuzzy-basierte Vorrichtung als einen zweiten separaten Fuzzy-Regler, die dritte Fuzzy-basierte Vorrichtung als einen dritten separaten Fuzzy-Regler und die vierte Fuzzy-basierte Vorrichtung als einen vierte separate Fuzzy-Regler auszubilden, wobei zur Verknüpfung dieser vier Fuzzy-Regler der Eingang des vierten Fuzzy-Reglers mit den Ausgängen der anderen drei Fuzzy-Regler Teilregler verbunden ist.

Nach dem erfindungsgemäßen Verfahren und System werden somit der ermittelte Relevanzwert, Kritikalitätswert und ein momentaner Ressourcenauslastungswert wiederum als zu berücksichtigende Zielfunktionen als separate Stellgrößen der nachfolgenden Ermittlung eines Skalierungswertes für jede ausgewählte Software-Anwendung zugeführt.

In einer bevorzugten Ausführungsform eines erfindungsgemäßen Fuzzy-Regelsystems weist die zweite Fuzzy-basierte Vorrichtung einen Speicher auf, in welchem vorbestimmte zeitliche Nutzungsverhaltensprofile gespeichert sind, wobei die zweite Fuzzy-basierte Vorrichtung dazu ausgebildet ist, unter Ansprechen auf die zu vorbestimmten Zeitpunkten ermittelte Ressourcen-Nutzung ein vorbestimmtes Nutzungsverhaltensprofil zu erkennen.

Weitere Vorteile und Merkmale der Erfindung werden aus der nachfolgenden Beschreibung bevorzugter Ausführungsbeispiele unter Bezugnahme auf die beigefügten Zeichnungen ersichtlich.

In den Zeichnungen zeigen:
Fig. 1 eine verallgemeinert dargestellte Prinzipskizze einer als Fuzzy-Regler ausgebildeten Fuzzy-basierten Vorrichtung des erfindungsgemäßen Systems,
Fig. 2 bevorzugte Eingangsgrößen für eine erste Fuzzy-basierte Vorrichtung gemäß dem erfindungsgemäßen Fuzzy-Regelsystem,
Fign. 3a, 3b bevorzugte Eingangsgrößen für eine zweite und dritte Fuzzy-basierte Vorrichtung gemäß dem erfindungsgemäßen Fuzzy-Regelsystem,
Fig. 4 eine vereinfacht dargestellte Skizze eines Fuzzy-Reglers mit vier Fuzzy-basierten Vorrichtungen nach dem erfindungsgemäßen Fuzzy-Regelsystem,
Fig. 5 bis 8 Prinzipskizzen bevorzugter Ausführungsbeispiele eines erfindungsgemäßen Verfahrens zur Regelung der Ressourcenzuordnung zu mehreren Software-Anwendungen, welche einen Gruppe bilden, basierend auf vier Fuzzy-basierten Vorrichtungen nach dem erfindungsgemäßen Fuzzy-Regelsystem,

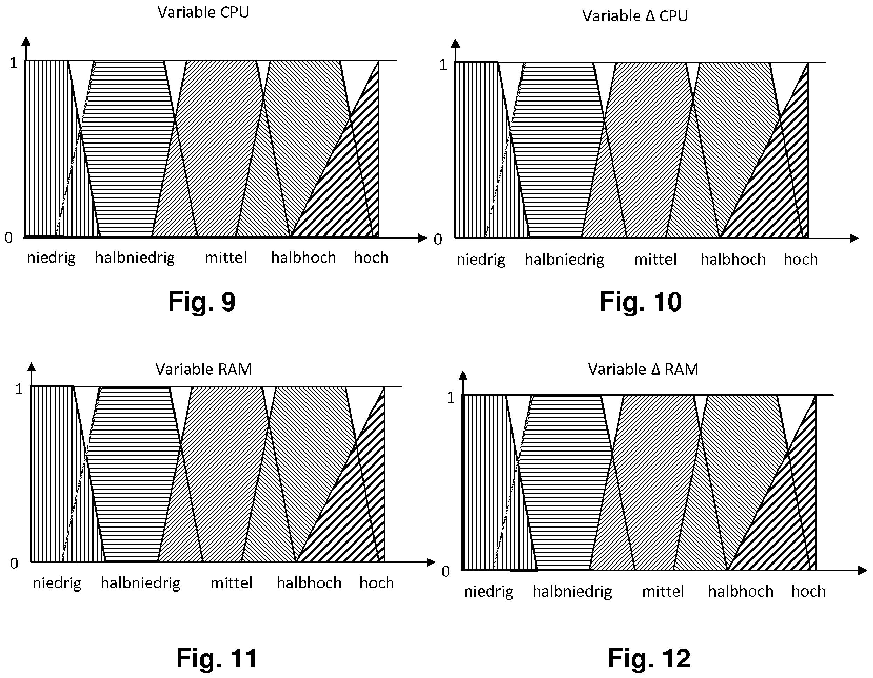

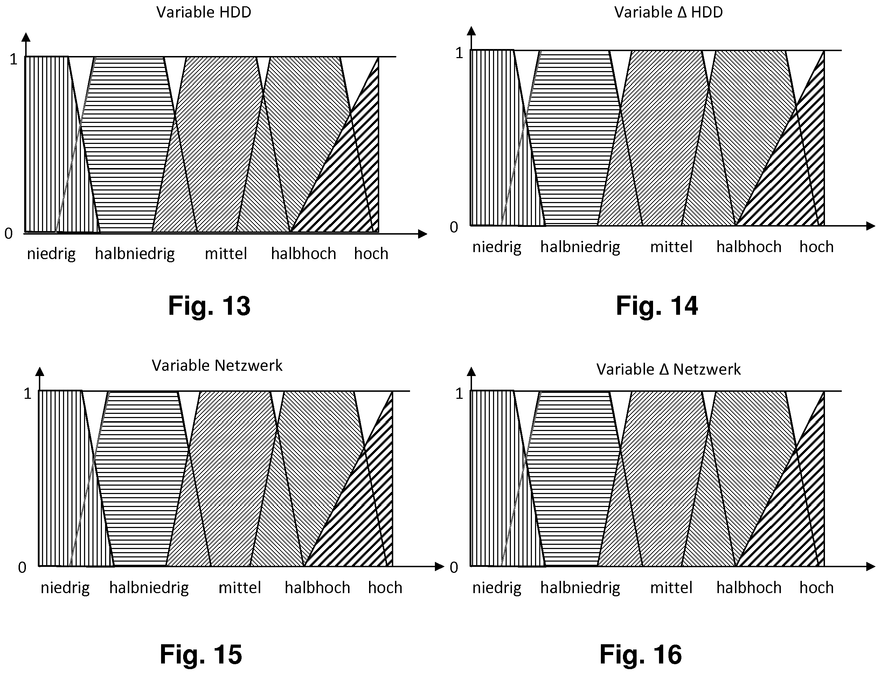

Fig. 9 bis 27 zweckmäßige Fuzzy-Sets in Bezug auf eine Variable CPU, eine Variable CPU-Delta, eine Variable RAM, eine Variable RAM-Delta, eine Variable HDD, eine Variable HDD-Delta, eine Variable Netzwerk, eine Variable Netzwerk-Delta, eine Variable Nutzungsverhalten, eine Variable Uhrzeit, eine Variable Tagesnutzungsprofil, eine Variable Wochennutzungsprofil, eine Variable Priorität, eine Variable Sicherheitsrelevanz, eine Variable Kritikalität, eine Variable Relevanz, eine Variable momentaner Ressourcenauslastung VM, eine Variable Systemkapazität und eine Variable Skalierung als Beispiele von linguistisch beschriebenen, einer jeweiligen Software-Anwendung zuweisbare Variablen gemäß zur Veranschaulichung verschiedener Ausführungsformen eines erfindungsgemäßen Fuzzy-Regelsystems,
Fig. 28 bis 30 beispielhafte Ressourcen-Nutzungsverläufe über die Zeit anhand beispielhafter Software-Anwendungen,
Fig. 31-37 beispielhafte Ressourcen-Nutzungen mehrerer Software-Anwendungen, welche eine Gruppe bilden, über die Zeit, und
Fig. 38-50 beispielhafte Ressourcen-Nutzungen basierend auf dem Datenverkehr einzelner Software-Anwendungen über die Zeit.

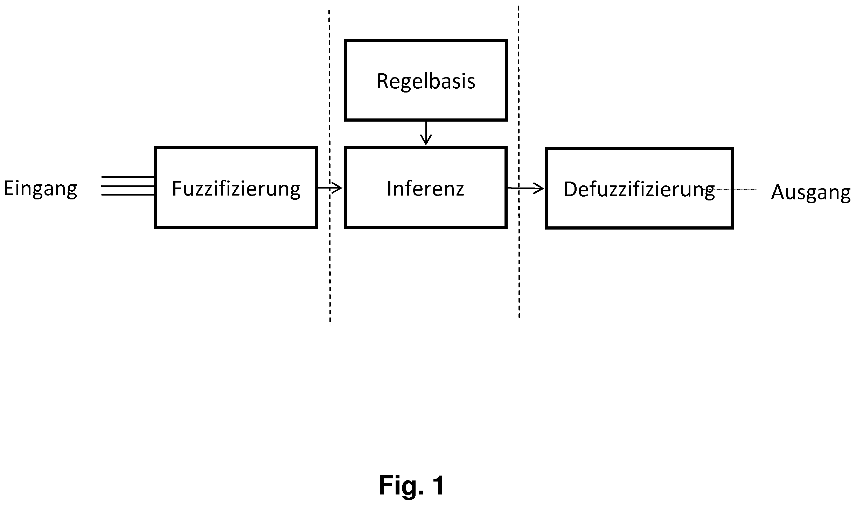

Figur 1 zeigt eine verallgemeinert dargestellte Prinzipskizze eines Fuzzy-Reglers, wie er gemäß dem Verfahren und dem System der Erfindung zur Anwendung kommt. Bekanntermaßen gehören Fuzzy-Regler zur Klasse der Kennfeld-Regler, die der Theorie der Fuzzy-Logik entsprechen. Üblicherweise werden in jedem Reglungsschritt drei Teilschritte durchgeführt, das sind der Schritt einer Fuzzifizierung, einer Inferenz und am Schluss der Schritt einer Defuzzifizierung, wobei die einzelnen Ein- und Ausgänge als linguistische Variablen beschrieben werden, zu denen jeweils Fuzzy-Mengen gehören.

Die Fuzzy-Mengen wiederum werden aus einer Menge von Zugehörigkeitsfunktionen, auch Fuzzy-Sets genannt, gebildet. Diese Zugehörigkeitsfunktionen oder Fuzzy-Sets sind üblicherweise vorkonfiguriert und können beispielsweise die Form eines Dreiecks, Trapezes oder Kurvenstücks annehmen (vgl. Fig. 9 bis 27), wobei diesbezüglich und zur Dokumentation des Fachwissens des hier anzusetzenden Fachmanns vollumfänglich auf die Offenlegungsschrift DE 195 02 230 A1 verwiesen wird. Die Fuzzy-Sets ordnen die linguistischen Eingangsvariablen in "unscharfe" Klassen ein und belegen die zu linguistischen Eingangsvariablen entsprechend durch Messung oder anders erhaltenen "scharfen" Eingangswerte mit einem Klassenzugehörigkeitswert zwischen 0% und 100%. Entsprechend können die zu einer linguistischen Ausgangsvariable entsprechend auszugebenden "scharfen" Ausgangswerte auf Zugehörigkeitsfunktionen basieren, und einen Zugehörigkeitswert in Bezug auf die unscharfe Klasseneinteilung von 0% bis 100% belegen.

Der Fuzzy-Regler bestimmt im Allgemeinen einen auszugebenden Stellwert aus der Regeldifferenz, das heißt aus der Differenz eines Sollwertes und eines gemessenen Istwertes, durch Abarbeitung der Schritte Fuzzifizierung, Inferenz und Defuzzifizierung.

Bei der Fuzzifizierung werden den mittels linguistischer Variablen beschriebenen Eingangswerten zugeordnete Fuzzy-Sets ausgewertet und Werte für Klassenzugehörigkeiten bestimmt.

Im Schritt der Inferenz werden anhand der Werte für Klassenzugehörigkeiten die Regeln für die Berechnung der Ausgabe vorgegeben (Regelbasis) und hierdurch auch eine Gewichtung der in die Berechnung einfließenden Größen bestimmt.

Bei der Defuzzifizierung werden die mittels linguistischer Variablen beschriebenen Ausgangswerte basierend auf den Regeln für die Berechnung und Gewichtung bestimmten Zugehörigkeitsfunktionen zugeordnet und entsprechend einem Zugehörigkeitswert bestimmt.

Ein Fuzzy-Regler ist somit ein nicht linearer Kennfeld-oder Zustandsregler und weist vom Grundsatz her keine innere Dynamik auf.

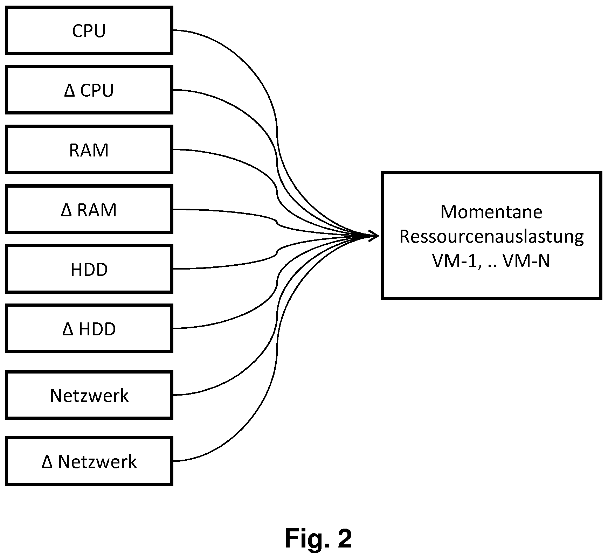

Die Figur 2 zeigt bevorzugte Eingangsgrößen für eine erste Fuzzy-basierte Vorrichtung zur Ermittlung von momentanen Ressourcenauslastungswerten VM-1 bis VM-N.

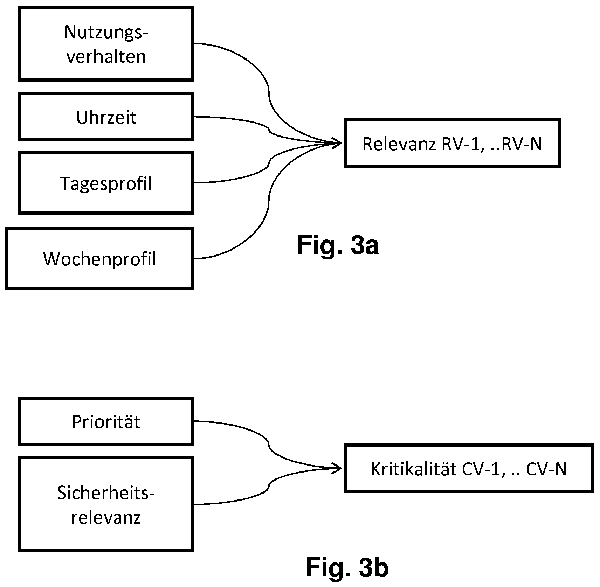

Die Figur 3a zeigt bevorzugte Eingangsgrößen für eine zweite Fuzzy-basierte Vorrichtung zur Ermittlung von Relevanzwerten RV-1 bis RV-N. Figur 3b zeigt bevorzugte Eingangsgrößen für eine dritte Fuzzy-basierte Vorrichtung zur Ermittlung von Kritikalitätswerten CV-1 bis CV-N.

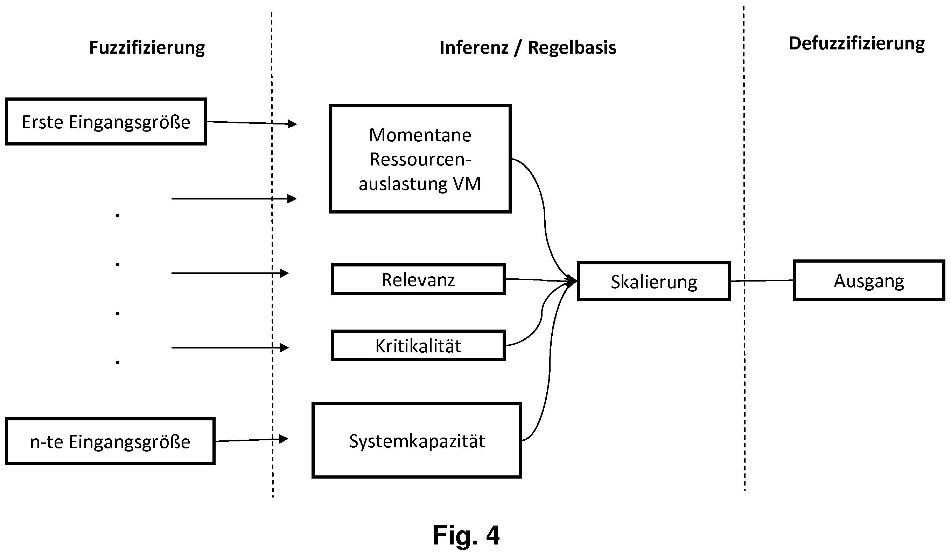

Figur 4 zeigt eine stark vereinfacht dargestellte Prinzipskizze eines nach dem erfindungsgemäßen Verfahren und nach dem erfindungsgemäßen System zur Anwendung kommenden Fuzzy-Reglers, welcher alle Fuzzy-basierten Vorrichtungen nach dem erfindungsgemäßen Fuzzy-Regelsystem in sich vereinigt. Figur 4 zeigt die Fuzzifizierung der Eingangsgrößen beispielsweise gemäß der Figuren 2, 3a und 3b, wobei die Fuzzifizierung für eine erste bis n-te Eingangsgrößen erfolgt, sowie die anschließende Inferenz und Defuzzifizierung zur Ermittlung eines Skalierungswertes als Ausgangsgröße.

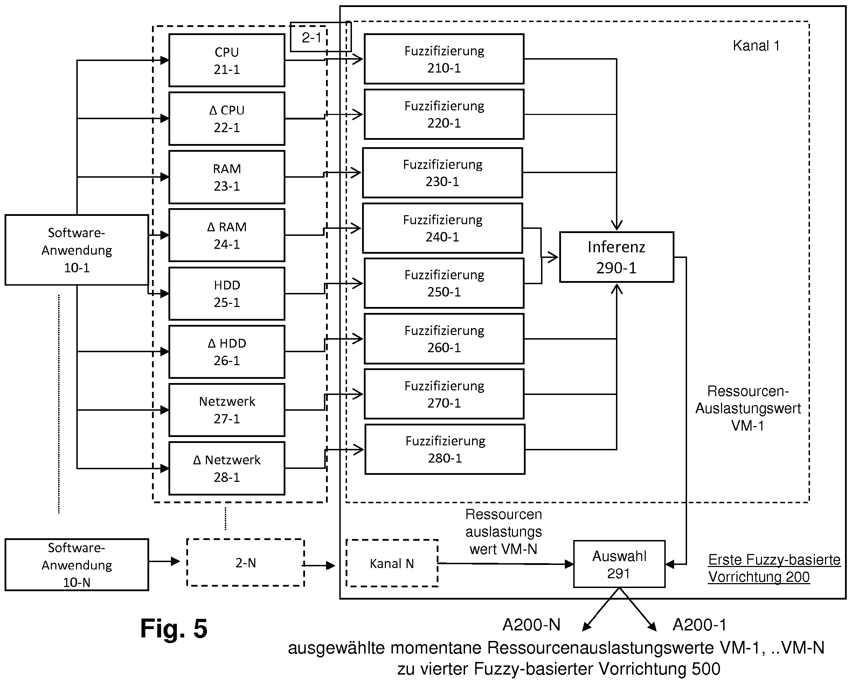

Nachfolgend wird auf die Figuren 5 bis 8 Bezug genommen, welche ein Ausführungsbeispiel des erfindungsgemäßen Verfahrens zur Fuzzy-basierten Regelung mittels Fuzzybasierter Vorrichtungen 200 bis 500 eines erfindungsgemäßen Fuzzy-Regelsystems zur Regelung der Ressourcenzuordnung zu einer oder mehrerer Software-Anwendungen 10-1 bis 10-N, welche eine Gruppe bilden und insbesondere auf virtuellen Maschinen betrieben werden, zeigen.

Es sei darauf hingewiesen sei, dass diese als Fuzzy-Regler 200, 300, 400, 500 ausgebildeten Fuzzy-basierten Vorrichtungen in Abwandlung zu den Figuren 5 bis 8 auch gemeinsame Teile eines einzigen Fuzzy-Reglers sein können, wobei der Aufbau dann jedoch aufgrund der internen Quer-Rückführungen komplexer und aufwendiger wird.

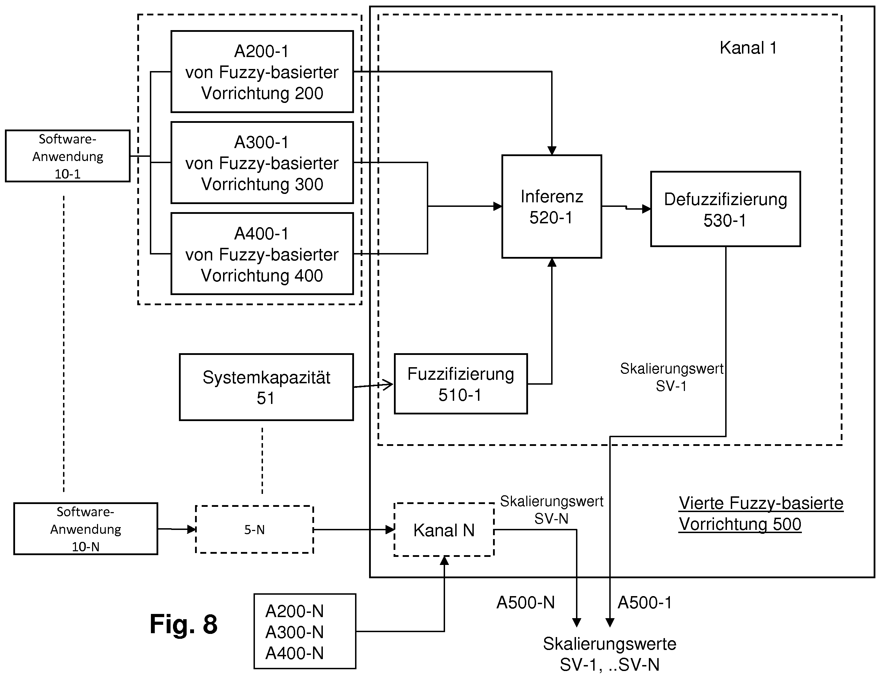

Der Einfachheit halber bezieht sich die nachfolgende Beschreibung gemäß Figuren 5 bis 8 jedoch auf die bevorzugte Ausführungsform, dass die Fuzzy-basierten Vorrichtungen 200 bis 500 separate Fuzzy-Regler 200 bis 500 sind. Diese sind derart miteinander verknüpft, dass die Ausgänge A200-1 bis A200-N, A300-1 bis A300-N und A400-1 bis A400-N der Fuzzy-Regler 200 bis 400 gemäß Figur 8 mit den Eingängen einer Inferenzeinrichtung 520-1 des vierten Fuzzy-Reglers 500 verbunden sind.

Vorweg sei darauf hingewiesen, dass die separaten Fuzzy-Regler 200 bis 400 gemäß der Figuren 5 bis 7 keine Defuzzifizierungseinrichtungen aufweisen, weshalb die aus den Fuzzy-Reglern 200 bis 400 ausgehenden Werte nicht defuzzifiziert sind. Es sei jedoch des Weiteren darauf hingewiesen, dass in einer zweckmäßigen Ausführungsform der Erfindung die Fuzzy-Regler 200 bis 400 jeweils auch Defuzzifizierungseinrichtungen aufweisen können, so dass deren, aus den Ausgängen ausgehenden und in die Inferenzeinrichtung 520-1 des vierten Fuzzy-Reglers 500 eingehenden Werte zweckmäßig durch eine oder mehrere Fuzzifizierungseinrichtungen des vierten Fuzzy-Reglers 500 zunächst wieder fuzzifiziert werden.

Grundsätzlich kann eine Anzahl von N Software-Anwendungen, die eine gemeinsame Gruppe bilden, sukzessive und also jeweils nacheinander am selben Verarbeitungskanal angeschaltet werden, so dass in einer einfachen Ausführung der Erfindung und in abgewandelter Ausbildung zu einem Fuzzy-Regler 200 gemäß Figur 5 auch eine Fuzzy-basierte Vorrichtung mit lediglich einem Verarbeitungskanal eingesetzt werden kann.

Gemäß der in Figur 5 gezeigten, bevorzugten Ausführungsform der Erfindung stellt der Fuzzy-Regler 200 jedoch zweckmäßig für jede angeschaltete Software-Anwendung einen Verarbeitungskanal zur Verfügung, so dass für einen N-kanalig ausgelegten Fuzzy-Regler 200 eine Anzahl von N Software-Anwendungen, die eine gemeinsame Gruppe bilden, an den Fuzzy-Regler 200 gemeinsam, d.h. parallel angeschaltet werden können.

Der Fuzzy-Regler 200 ist erfindungsgemäß so ausgebildet, dass er für eine jede angeschaltete Software-Anwendung 10-1 bis 10-N in Abhängigkeit von deren jeweiligen aktuellen Ressourcen-Nutzung, das heißt basierend auf einer Messung einer aktuellen Nutzung von wenigstens einer Ressource, z.B. eines CPU-Wertes, bevorzugt jedoch auch von weiteren Ressourcen, wie z.B. einem CPU-Delta-Wert, einem RAM-Wert, einem RAM-Delta-Wert, einem HDD-Wert, einem HDD-Delta-Wert, einem Netzwerk-Wert und/oder einem Netzwerk-Delta-Wert, in Bezug auf jede Ressource einen momentanen Ressourcenauslastungswert VM-1 bis VM-N für jede angeschaltete Software-Anwendung ermittelt und wenigstens eine Software-Anwendung 10-1,...,10-N mit einem höchsten Ressourcenauslastungswert auswählt.

Eine erste Software-Anwendung 10-1, welche vorzugsweise auf einer virtuellen Maschine betrieben wird, z.B. eine Webanwendung, beispielsweise eine Lohnbuchhaltungs-Software-Anwendung, ist an einen ersten Kanal 10-1 des ersten Fuzzy-Reglers 200 angeschaltet. Eine zweite Software-Anwendung 10-2 ist beispielsweise eine Datenbankanwendung, welche an einem zweiten Kanal des ersten Fuzzy-Reglers 200 angeschaltet ist.

Zur Messung für jede Ressource einer aktuellen Ressourcen-Nutzung durch jede der Software-Anwendungen der Gruppe ist zweckmäßig jede Software-Anwendung 10-1 bis 10-N über eine Anschalteinrichtung 2-1 bis 2-N an jeweils einen Kanal des ersten Fuzzy-Reglers 200 angeschaltet, wobei eine solche Anschalteinrichtung, z.B. eine Anschalteinrichtung 2-1 für den Kanal 1 zweckmäßig zumindest Ressourcen-Nutzungsmesser 21-1 bis 28-1 umfasst. Bei paralleler Anschaltung von weiteren Software-Anwendungen an den ersten Fuzzy-Reglers 200 sind in Figur 5 nicht dargestellte Anschalteinrichtungen für die weiteren Kanäle entsprechend aufgebaut, wobei auch die einzelnen Kanäle einander entsprechend aufgebaut sind.

Sind jedoch in einer zu vorstehend aufgezeigten, abgewandelten Ausführung die Anzahl von N Software-Anwendungen, die eine gemeinsame Gruppe bilden, sukzessive und also jeweils nacheinander an einen selben Verarbeitungskanal angeschaltet, können alle Software-Anwendungen z.B. an dieselbe Anschalteinrichtung angeschaltet sein, welche dann zweckmäßig eine entsprechende Auswahleinrichtung beinhaltet.

Aus Gründen der Übersichtlichkeit wird nachfolgend von einer parallelen Anschaltung ausgegangen und daher lediglich der Aufbau einer Fuzzy-basierten Vorrichtung 200 für den Kanal 1 beschrieben.

Der Ressourcen-Nutzungsmesser 21-1 des Fuzzy-Reglers 200 gemäß Figur 5 misst beispielsweise die aktuelle Ressourcen-Nutzung an CPU der angeschalteten Software-Anwendung 10-1, beispielsweise der Lohnbuchhaltungs-Software-Anwendung. Der Ausgangswert des Ressourcen-Nutzungsmessers 21-1 entspricht somit einer aktuellen Ressourcen-Nutzung der Ressource "CPU" und wird als Eingangswert zunächst einer zur Fuzzifizierung entsprechend angepassten Einrichtung 210-1 des Kanals 1 des ersten Fuzzy-Reglers 200 zugeführt.

Wie bereits zu Figur 1 beschrieben, werden Fuzzy-Mengen wiederum aus einer Menge von Zugehörigkeitsfunktionen, auch Fuzzy-Sets genannt, gebildet.

Für die CPU-Nutzung wäre dies beispielsweise das Fuzzy-Set gemäß Figur 9 und/oder Figur 10. Zur Fuzzy-basierten Verarbeitung des Ausgangswerts des Nutzungsmessers 21-1 sind in der Fuzzy-basierten Vorrichtung 200 zur Beschreibung einer linguistischen Variablen "CPU" daher der Software-Anwendung 10-1 zugeordnete Fuzzy-Sets beispielsweise gemäß Figur 9 hinterlegt, welche die linguistische Eingangsvariable "CPU" in "unscharfe" Klassen z.B. von "niedrig" bis "hoch" einordnet, und auf welche die Fuzzy-basierte Verarbeitung der Fuzzy-basierten Vorrichtung 200 entsprechend dessen interner Reglerverschaltung zurückgreift.

Basierend auf dem zu der Software-Anwendung 10-1 gehörenden Ausgangswert des Ressourcen-Nutzungsmessers 21-1 wertet die Fuzzifizierungseinrichtung 210-1 das beispielhafte Fuzzy-Set gemäß Figur 9 aus und bestimmt hieraus die Werte für Klassenzugehörigkeiten für die gemessene CPU Nutzung. Die Werte der Klassenzugehörigkeiten können hierbei in der Regel zwischen 0% und 100% liegen, wobei Figur 9 an der linken Ordinate mit dem Wert 0 "0%" und mit dem Wert 1 "100%" bezeichnet und auf der Abszisse von Figur 9 die unscharfen CPU Nutzungsbereiche eingetragen sind. Eine von dem Ressourcen-Nutzungsmesser 21-1 gemessene CPU Nutzung der Software-Anwendung 10-1 und eine entsprechend ausgegebene Ressourcen-Nutzung könnte beispielsweise basierend auf Figur 9 zu 80% als mittel und zu 60% als halbniedrig eingeordnet werden.

Zur zweckmäßigen Messung der aktuellen Nutzung von weiteren Ressourcen umfasst die Anschalteinrichtung 2-1 des Kanals 1 gemäß Figur 5 weitere Nutzungsmesser Delta-CPU 22-1, RAM 23-1, Delta-RAM 24-1, HDD 25-1, Delta-HDD 26-1, Netzwerk 27-1 sowie Delta-Netzwerk 28-1 zur Messung der Ressourcen-Nutzung durch die Software-Anwendung 10-1 der Gruppe.

Entsprechend obiger Beschreibung zum Ressourcen-Nutzungsmesser 21-1 und der Fuzzifizierungseinrichtung 210-1 werten weitere Fuzzifizierungseinrichtungen 220-1 bis 280-1 des ersten Fuzzy-Reglers 200 basierend auf den jeweiligen Ausgangswerten der Ressourcen-Nutzungsmesser 22-1 bis 28-1 entsprechende Fuzzy-Sets beispielsweise gemäß der Figuren 10 bis 16 aus und bestimmen hieraus die Werte für Klassenzugehörigkeiten, welche anschließend an eine Inferenzeinrichtung 290-1 kommuniziert werden.

Infolgedessen werden die von der Fuzzifizierungseinrichtung 210-1 des Kanals 1 des ersten Fuzzy-Reglers 200 als aktive Fuzzy-Sets bezeichneten Sets, d.h. die Sets, die eine Zugehörigkeit größer 0% zu der gemessenen Eingangsgröße, das heißt der CPU-Nutzung, haben, und also gemäß obigen Beispiels das Fuzzy-Set "mittel" und das Fuzzy-Set "halbniedrig", daraufhin der Inferenzeinrichtung 290-1 kommuniziert, welche zur Durchführung einer Inferenz der Fuzzifizierungseinrichtung 210-1 logisch nachgeschaltet ist und welche diese als aktiv bezeichneten Fuzzy-Sets durch vorher festgelegte Regeln für die Berechnung einer Ausgabe vorbereitet.

In der Inferenzeinrichtung 290-1 des ersten Fuzzy-Regler 200 sind somit Regelwerke für die einzelnen Fuzzy-Sets, beispielsweise gemäß der Figuren 9 bis 16, hinterlegt, die von dieser ausgewählt und für die nachfolgende Berechnung einer Ausgabe entsprechend festgelegt werden, sofern ein jeweiliges Fuzzy-Set zweckmäßig als aktiv von der Fuzzifizierungseinrichtung 210-1 der Inferenzeinrichtung 290-1 mitgeteilt worden ist.

Die Inferenzeinrichtung 290-1 legt zweckmäßig auch eine Gewichtung von in die Berechnung einfließenden Größen fest, wobei insbesondere die Inferenzeinrichtung 290-1 des ersten Reglers 200 die Software-Anwendung 10-1 der Gruppe in Abhängigkeit von deren aktuellen Ressourcen-Nutzung eine Ressourcenauslastung VM-1 für die Ressource "CPU" und wie oben beschrieben auch zweckmäßig für weitere Ressourcen ermittelt.

Erfindungsgemäß ermittelt somit die Inferenzeinrichtung 290-1 des ersten Reglers 200 einen Ressourcenauslastungswert VM-1 für die Software-Anwendung 10-1 der Gruppe in Abhängigkeit von der aktuellen Ressourcen-Nutzungen durch in Bezug auf jede Ressource einer Anschalteinrichtung 2-1. Weitere Inferenzeinrichtungen 290-2 bis 290-N von weiteren Kanälen einer als erster Regler 200 ausgebildeten Fuzzy-basierten Vorrichtung 200 ermitteln zweckmäßig weitere Ressourcenauslastungswerte VM-2 bis VM-N von weiteren Software-Anwendungen der Gruppe 10-2 bis 10-N ausgehend von weiteren Anschalteinrichtungen 2-2 bis 2-N, und zwar in Abhängigkeit von deren aktuellen Ressourcen-Nutzungen in Bezug auf eine jede Ressource.

Gemäß der bevorzugten Ausführungsform der Erfindung nach Figur 5 werden alle ermittelten Ressourcenauslastungswerte VM-1 bis VM-N anschließend einer Auswahleinrichtung 291 übergeben. Diese kann Teil des ersten Fuzzy-Reglers sein oder auch diesem logisch nachgeschaltet sein und wählt wenigstens eine, bevorzugt jedoch mehrere, Software-Anwendungen 10-1 bis 10-N mit einem höchsten zugehörenden Ressourcenauslastungswert VM-1 bis VM-N aus.

Infolgedessen kann die Auswahleinrichtung 291 auch mehrere Ressourcenauslastungswerte VM-1 bis VM-N ausgeben. An den Ausgängen A200-1 bis A200-N des als ersten Fuzzy-Reglers ausgebildeten ersten Fuzzy-basierten Vorrichtung 200 liegen somit ein höchster, bevorzugte jedoch mehrere höchste Ressourcenauslastungswerte VM-1 bis VM-N an, welche anschließend dem Eingang einer Inferenzeinrichtung 520-1 eines als vierter Fuzzy-Regler 500 ausgebildeten vierten Fuzzy-basierten Vorrichtung 500 übergeben werden, dessen Beschreibung nachfolgend erfolgt.

Ist in Abwandlung zur zweckmäßigen Ausbildung gemäß Fig. 5 vorgesehen, eine Anzahl von N Software-Anwendungen, die eine gemeinsame Gruppe bilden, sukzessive und also jeweils nacheinander an einen selben Verarbeitungskanal des ersten Fuzzy-Reglers 200 anzuschalten, sind die jeweils ermittelten Ressourcenauslastungswerte VM-1 bis VM-N folglich zur Auswahl der Software-Anwendungen mit einem höchsten zugehörenden Ressourcenauslastungswert VM-1 bis VM-N zuvor in einem hierfür vorgesehen Speicher zwischen zu speichern, der jedoch in den Figuren aus Gründen der Übersichtlichkeit nicht dargestellt ist. Die Zwischenspeicherung kann hierbei zweckmäßig vor der Übergabe an die Auswahleinrichtung 291 oder innerhalb dieser erfolgen.

Alternativ kann die Auswahl einer jeden Software-Anwendung mit einem höchsten momentanen Ressourcenauslastungswert 290-1 bis 290-N, insbesondere durch eine Inferenzeinrichtung 520-1, des oben erwähnten vierten Fuzzy-Reglers 500 erfolgen und/oder dieser kann hierfür selbst einen Speicher beinhalten.

In jedem Fall ist jedoch zweckmäßig ein Regelwerk in der Inferenzeinrichtung 520-1 einer vierten Fuzzy-basierten Vorrichtung hinterlegt, so dass hierauf basierend gegebenenfalls auch zwei oder mehr Software-Anwendungen mit den höchsten Ressourcenauslastungswerten VM-1 bis VM-N auswählbar sind.

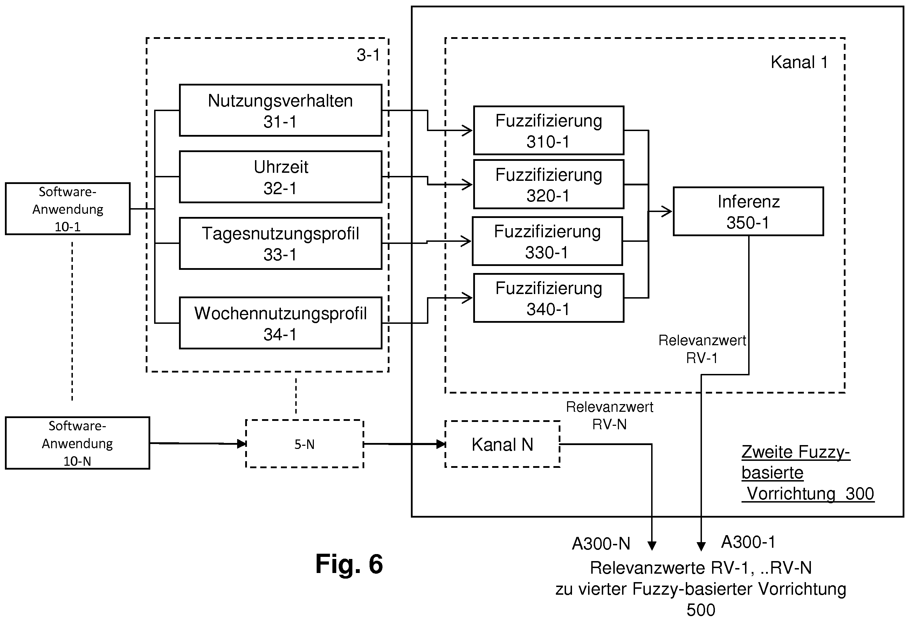

Das erfindungsgemäße Fuzzy-Regelsystem weist eine weitere, zweite Fuzzy-basierte Vorrichtung 300 auf, die in einer bevorzugten Ausführungsform gemäß Figur 6 als zweiter Fuzzy-Regler 300 zur Ermittlung von Relevanzwerten RV einer oder mehrerer Software-Anwendungen 10-1 bis 10-N, welche bevorzugt durch eine Auswahleinrichtung 291 eines ersten Fuzzy-Reglers 200 gemäß Figur 5 ausgewählt sind, aufgebaut ist.

Erfindungsgemäß kann ein Relevanzwert RV-1 bis RV-N einer Software-Anwendung 10-1 bis 10-N in Abhängigkeit von einem anwendungsspezifischen Nutzungsverhalten dieser Software-Anwendung 10-1 bis 10-N ermittelt werden, insbesondere von einem anwendungsspezifischen Tages- oder Wochennutzungsprofil und/oder der Uhrzeit.

Grundsätzlich kann auch der zweite Fuzzy-Regler 300 entsprechend dem ersten Fuzzy-Regler 200 wiederum entweder einkanalig oder mehrkanalig aufgebaut sein.
Infolgedessen kann an den zweiten Fuzzy-Regler 300 eine Anzahl von N Software-Anwendungen sukzessive und also jeweils nacheinander am selben Verarbeitungskanal angeschaltet werden.

Gemäß der in Figur 6 bevorzugten Ausführungsform der Erfindung stellt zumindest der zweite Fuzzy-Regler 300 jedoch zweckmäßig für jede angeschaltete Software-Anwendung 10-1 bis 10-N einen Verarbeitungskanal zur Verfügung, so dass für einen N-kanalig ausgelegten zweiten Fuzzy-Regler 300 eine Anzahl von N Software-Anwendungen gemeinsam, d.h. parallel angeschaltet werden können.

Zur Bestimmung eines Relevanzwertes für jede der ausgewählten Software-Anwendungen ist zweckmäßig eine jede ausgewählte Software-Anwendung 10-1 bis 10-N über eine Anschalteinrichtung 3-1 bis 3-N an jeweils einen Kanal des zweiten Fuzzy-Reglers 300 angeschaltet, wobei eine solche Anschalteinrichtung, z.B. eine Anschalteinrichtung 3-1 für den Kanal 1, zweckmäßig zumindest einen Ressourcen-Nutzungsverhaltensmesser 31-1 umfasst. Bei paralleler Anschaltung von weiteren Software-Anwendungen an den zweiten Fuzzy-Reglers 300 sind in Figur 6 nicht dargestellte Anschalteinrichtungen für die weiteren Kanäle entsprechend aufgebaut, wobei auch die einzelnen Kanäle einander entsprechend aufgebaut sind.

Sind jedoch in einer zu vorstehend aufgezeigten, abgewandelten Ausführung die Anzahl von N Software-Anwendungen sukzessive und also jeweils nacheinander an einen selben Verarbeitungskanal angeschaltet, können alle Software-Anwendungen z.B. an die selbe Anschalteinrichtung angeschaltet sein, welche dann zweckmäßig eine entsprechende Auswahleinrichtung beinhaltet, mit welcher die Software-Anwendungen wiederum sukzessive an denselben Verarbeitungskanal angeschaltet werden können.

Aus Gründen der Übersichtlichkeit wird nachfolgend wiederum von einer parallelen Anschaltung ausgegangen und daher lediglich der Aufbau einer zweiten Fuzzy-basierten Vorrichtung 300 anhand eines Fuzzy-Reglers 300 für den Kanal 1 beschrieben.

Figur 6 zeigt, dass der Ausgangswert des Nutzungsverhaltensmessers 31-1, welcher das aktuelle Nutzungsverhalten 31-1 der Software-Anwendung 10-1 angibt, beispielsweise der oben erwähnten Lohnbuchhaltungs-Software-Anwendung, zunächst als Eingangswert einer zur Fuzzifizierung entsprechend angepassten Einrichtung 310-1 des Kanals 1 des zweiten Fuzzy-Reglers 300 zugeführt wird. Der Nutzungsverhaltensmessers 31-1 kann zu einer der Messeinrichtungen 21-1 bis 28-1 des ersten Fuzzy-Reglers 200 identisch sein oder kann dieser entsprechen, so dass diesbezüglich insofern auf die Ausführungen zur Figur 5 verwiesen wird.

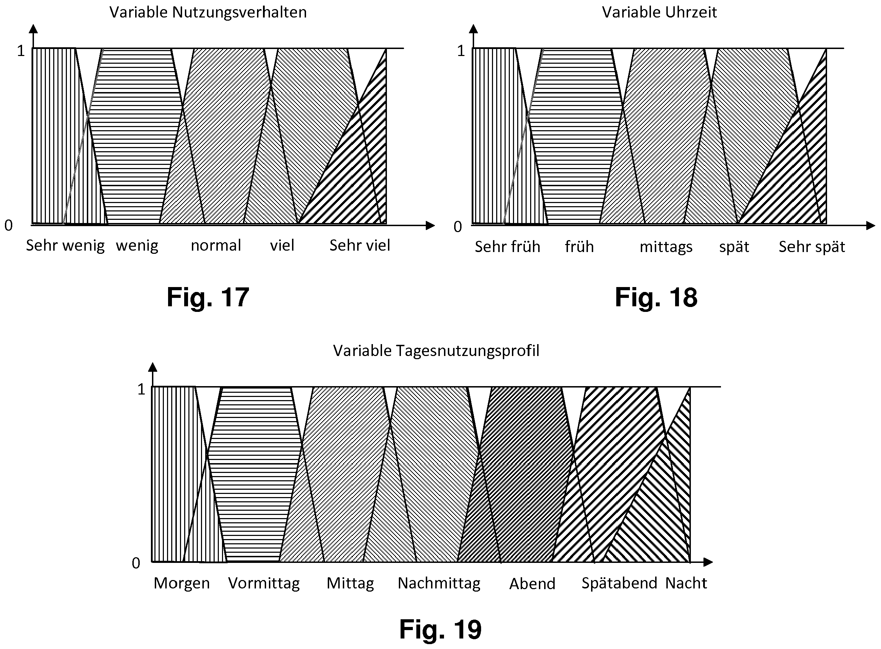

Basierend auf dem zu der Software-Anwendung 10-1 gehörenden Ausgangswert des Nutzungsverhaltensmessers 31-1 wertet die Fuzzifizierungseinrichtung 310-1 das beispielhafte Fuzzy-Set gemäß Figur 17 aus und bestimmt hieraus die Werte für Klassenzugehörigkeiten für das gemessene Nutzungsverhalten.

Zur zweckmäßigen, weiteren Bestimmung des Nutzungsverhaltens einer Software-Anwendung umfasst die Anschalteinrichtung 3-1 des zweiten Fuzzy-Reglers 300 gemäß Figur 6 weitere Einrichtungen. So kann an den zweiten Fuzzy-Regler 300 ein Zeitgeber angeschaltet sein. Der Ausgangswert einer Messeinheit 32-1, welche beispielsweise die aktuelle Uhrzeit angibt, wird als Eingangswert zunächst einer zur Fuzzifizierung entsprechend angepassten Einrichtung 320-1 des Kanals 1 des zweiten Fuzzy-Reglers 300 zugeführt. Der Ausgangswert einer zweckmäßigen Messeinheit 33-1, welche das aktuelle Tagesnutzungsprofil angibt, wird als Eingangswert zunächst einer zur Fuzzifizierung entsprechend angepassten Einrichtung 330-1 des Kanals 1 des zweiten Fuzzy-Reglers 300 zugeführt. Der Ausgangswert der zweckmäßigen Messeinheit 34-1, welche das aktuelle Wochennutzungsprofil angibt, wird als Eingangswert zunächst einer zur Fuzzifizierung entsprechend angepassten Einrichtung 320-1 des Kanals 1 des zweiten Fuzzy-Reglers 300 zugeführt.

Entsprechend der obigen Beschreibung zum Nutzungsverhaltensmesser 31-1 der Fuzzifizierungseinrichtung 310-1 werten auch die jeweiligen weiteren Fuzzifizierungseinrichtungen 320-1 bis 340-1 des zweiten Fuzzy-Reglers 300 basierend auf den Ausgangswerten der Nutzungsverhaltensmesser 32-1 bis 34-1 entsprechende Fuzzy-Sets beispielsweise gemäß der Figuren 18 bis 20 aus und bestimmen hieraus die Werte für Klassenzugehörigkeiten und kommunizieren diese daraufhin einer Inferenzeinrichtung 350-1. In der Inferenzeinrichtung 350-1 sind somit Regelwerke für die einzelnen Fuzzy-Sets, beispielsweise gemäß der Figuren 18 bis 20, hinterlegt, die von dieser ausgewählt und für die nachfolgende Berechnung einer Ausgabe entsprechend festgelegt werden, sofern insbesondere ein jeweiliges Fuzzy-Set als aktiv von der Fuzzifizierungseinrichtung 310-1 bis 340-1 der Inferenzeinrichtung 350-1 mitgeteilt worden ist.

Erfindungsgemäß ermittelt somit die Inferenzeinrichtung 350-1 des zweiten Reglers 300 einen Relevanzwert RV-1 für die Software-Anwendung 10-1 der Gruppe in Abhängigkeit von deren Nutzungsverhalten. Weitere Inferenzeinrichtungen 350-2 bis 350-N von weiteren Kanälen einer als zweiter Regler 300 ausgebildeten Fuzzy-basierten Vorrichtung 300 ermitteln zweckmäßig weitere Relevanzwerte RV-2 bis RV-N.

Gemäß der bevorzugten Ausführungsform der Erfindung nach Figur 6 werden alle ermittelten Relevanzwerte RV-1 bis RV-N anschließend an die Ausgänge A200-1 bis A200-N des zweiten Fuzzy-Reglers 300 angelegt und anschließend dem Eingang der oben bereits erwähnten Inferenzeinrichtung 520-1 des als vierter Fuzzy-Regler 500 ausgebildeten vierten Fuzzy-basierten Vorrichtung 500 übergeben werden, dessen Beschreibung nachfolgend erfolgt.

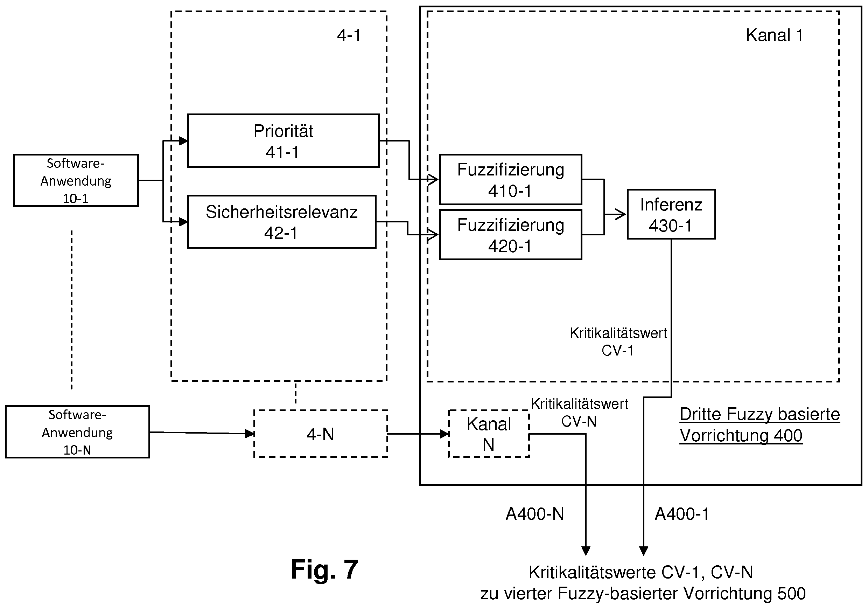

Das erfindungsgemäße Fuzzy-Regelsystem weist eine weitere, dritte Fuzzy-basierte Vorrichtung 400 auf, die in einer bevorzugten Ausführungsform gemäß Figur 7 als dritter Fuzzy-Regler 400 zur Ermittlung von Kritikalitätswerten CV einer oder mehrerer Software-Anwendungen 10-1 bis 10-N, welche bevorzugt durch eine Auswahleinrichtung 291 eines ersten Fuzzy-Reglers 200 gemäß Figur 5 ausgewählt sind, aufgebaut ist.

Erfindungsgemäß kann ein Kritikalitätswert CV-1 bis CV-N einer oder mehrerer Software-Anwendungen 10-1 bis 10-N zweckmäßig in Abhängigkeit von einem Prioritätswert und von einem Sicherheitsrelevanzwert ermittelt werden.

Grundsätzlich kann auch der dritte Fuzzy-Regler 400 entsprechend den ersten und zweiten Fuzzy-Reglern 200 und 300 wiederum entweder einkanalig oder mehrkanalig aufgebaut sein. Infolgedessen kann an den dritten Fuzzy-Regler 400 eine Anzahl von N Software-Anwendungen sukzessive und also jeweils nacheinander am selben Verarbeitungskanal angeschaltet werden.

Gemäß der in Figur 7 bevorzugten Ausführungsform der Erfindung stellt auch der dritte Fuzzy-Regler 400 zweckmäßig für jede angeschaltete Software-Anwendung 10-1 bis 10-N einen Verarbeitungskanal zur Verfügung, so dass für einen N-kanalig ausgelegten dritten Fuzzy-Regler 400 eine Anzahl von N Software-Anwendungen gemeinsam, d.h. parallel angeschaltet werden können.

Zur Bestimmung eines Kritikalitätswertes CV für jede der ausgewählten Software-Anwendungen ist zweckmäßig jede Software-Anwendung 10-1 bis 10-N über eine Anschalteinrichtung 4-1 bis 4-N an jeweils einen Kanal des dritten Fuzzy-Reglers 400 angeschaltet, wobei eine solche Anschalteinrichtung, z.B. eine Anschalteinrichtung 4-1 für den Kanal 1 zweckmäßig zumindest einen Prioritätsmesser 41-1 und einen Sicherheitsrelevanzmesser 42-1 umfasst. Diese können z.B. auch feste oder variable, in einer Datenbank abgelegte Größen ausgeben.

Bei paralleler Anschaltung von weiteren Software-Anwendungen an den dritten Fuzzy-Regler 400 sind in Figur 7 nicht dargestellte Anschalteinrichtungen für die weiteren Kanäle entsprechend aufgebaut, wobei auch die einzelnen Kanäle einander entsprechend aufgebaut sind.

Sind jedoch in einer zu vorstehend aufgezeigter, abgewandelten Ausführung die Anzahl von N Software-Anwendungen sukzessive und also jeweils nacheinander an einen selben Verarbeitungskanal angeschaltet, können wiederum alle Software-Anwendungen z.B. an die selbe Anschalteinrichtung angeschaltet sein, welche dann zweckmäßig eine entsprechende Auswahleinrichtung beinhaltet, mit welcher die Software-Anwendungen wiederum sukzessive an denselben Verarbeitungskanal angeschaltet werden können.

Aus Gründen der Übersichtlichkeit wird nachfolgend von einer parallelen Anschaltung ausgegangen und daher lediglich der Aufbau einer dritten Fuzzy-basierten Vorrichtung 400 anhand eines Fuzzy-Reglers 400 für den Kanal 1 beschrieben.

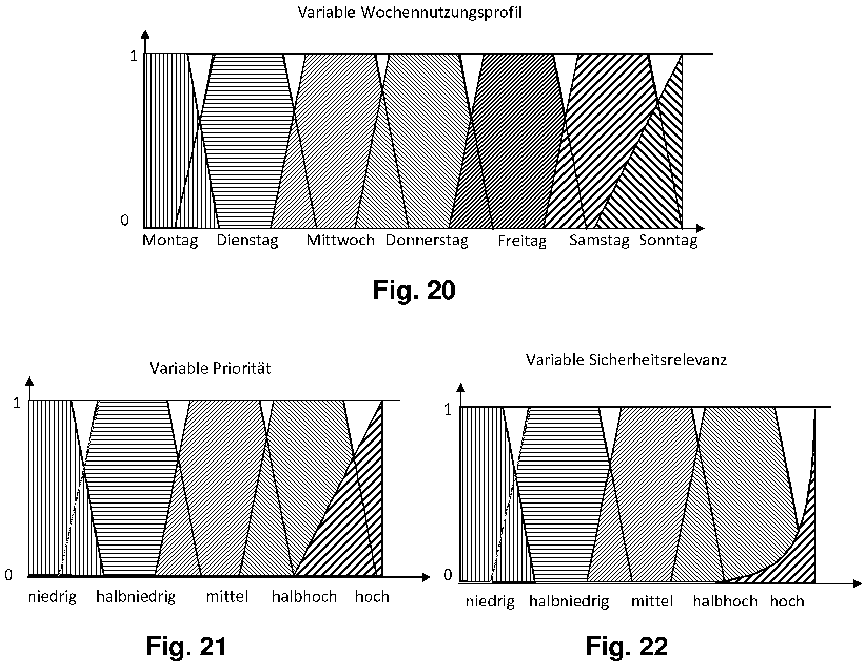

Gemäß der bevorzugten Ausführungsform des erfindungsgemäßen Fuzzy-Regelsystems und des erfindungsgemäßen Verfahrens nach Figur 7 wird der Ausgangswert des Prioritätsmessers 41-1 als Eingangswert zunächst einer zur Fuzzifizierung entsprechend angepassten Einrichtung 410-1 des Kanals 1 des dritten Fuzzy-Reglers 400 zugeführt.
Basierend auf dem zu der Software-Anwendung 10-1 gehörenden Ausgangswert des Prioritätsmessers 31-1 wertet die Fuzzifizierungseinrichtung 410-1 das beispielhafte Fuzzy-Set gemäß Figur 21 aus und bestimmt hieraus die Werte für Klassenzugehörigkeiten für die vom Prioritätsmesser ausgegebene Priorität.

Darüber hinaus wird gemäß Figur 7 der Ausgangswert der zweckmäßigen Messeinheit 42-1, welche eine aktuelle Sicherheitsrelevanz einer Software-Anwendung angibt, als Eingangswert zunächst einer zur Fuzzifizierung entsprechend angepassten Einrichtung 420-1 des Kanals 1 des dritten Fuzzy-Reglers 400 zugeführt.

Eine anwendungsspezifische Sicherheitsrelevanz ist erfindungsgemäß als eine linguistische Variable gemäß Figur 22 beschrieben, und ist beispielsweise im Falle einer Firewall erfassbar, kann jedoch auch im Fall einer Datenbank durch Abhängigkeiten weiterer Anwendungen bestimmt werden. Mit anderen Worten stellt die Sicherheitsrelevanz eine Variable dar, die die Relevanz einer Software-Anwendung in Bezug auf eine bestimmte Sicherheit (z. B. in Bezug auf Datenintegrität, Sicherheit, Funktionsfähigkeit von Systemen bis hin zu Gesundheit und Leben von Personen) beschreibt. So haben z.B. Sicherheitssysteme, wie beispielsweise Firewalls, in der Regel eine hohe Sicherheitsrelevanz.

Zur zweckmäßigen Bestimmung der Kritikalität kann die Anschalteinrichtung 4-1 des dritten Fuzzy-Reglers 400 weitere Einrichtungen umfassen, deren Ausgangswerte als Eingangswerte zunächst einer zur Fuzzifizierung entsprechend angepassten Fuzzifizierungseinrichtung des dritten Fuzzy-Reglers 400 zugeführt werden.

Die von der Fuzzifizierungseinrichtung 410-1 bis 420-1 als aktive Fuzzy-Sets bezeichneten Sets, d.h. die Sets, die eine Zugehörigkeit größer 0% zu der gemessenen Eingangsgröße haben, werden daraufhin einer Inferenzeinrichtung 430-1 kommuniziert, welche diese als aktiv bezeichneten Fuzzy-Sets durch vorher festgelegte Regeln für die Berechnung einer Ausgabe vorbereitet. In der Inferenzeinrichtung 430-1 sind somit Regelwerke für die einzelnen Fuzzy-Sets hinterlegt, beispielsweise gemäß der Figuren 21 und 22, die von dieser ausgewählt und für die nachfolgende Berechnung einer Ausgabe entsprechend festgelegt werden, sofern zweckmäßig ein jeweiliges Fuzzy-Set als aktiv von der Fuzzifizierungseinrichtung 410-1 bis 420-1 der Inferenzeinrichtung 430-1 mitgeteilt worden ist. Die Inferenzeinrichtung 430-1 legt insbesondere hierdurch somit auch eine Gewichtung von in die Berechnung einfließenden Größen fest.

Erfindungsgemäß ermittelt somit die Inferenzeinrichtung 430-1 des dritten Reglers 400 einen Kritikalitätswert CV-1 für die Software-Anwendung 10-1. Weitere Inferenzeinrichtungen 430-2 bis 430-N von weiteren Kanälen einer als dritter Regler 400 ausgebildeten Fuzzy-basierten Vorrichtung 400 ermitteln zweckmäßig weitere Kritikalitätswerte CV-2 bis CV-N.

Gemäß der bevorzugten Ausführungsform der Erfindung nach Figur 7 werden alle ermittelten Kritikalitätswerte CV-1 bis CV-N anschließend an die Ausgänge A300-1 bis A300-N des dritten Fuzzy-Reglers 300 angelegt und anschließend dem Eingang der oben bereits erwähnten Inferenzeinrichtung 520-1 der als vierter Fuzzy-Regler 500 ausgebildeten vierten Fuzzy-basierten Vorrichtung 500 übergeben, dessen Beschreibung nachfolgend erfolgt.

Das erfindungsgemäße Fuzzy-Regelsystem weist, wie bereits erwähnt, eine weitere, vierte Fuzzy-basierte Vorrichtung 500 auf. Wie Figur 8 zeigt, ist diese als vierter Fuzzy-Regler 500 zur Ermittlung eines oder mehrerer Skalierungswerte SV einer oder mehrerer ausgewählten Software-Anwendungen 10-1 bis 10-N aufgebaut, wobei die Software-Anwendungen bevorzugt durch die Auswahleinrichtung 291 des ersten Fuzzy-Reglers 200 ausgewählt sind.

Grundsätzlich kann auch der vierte Fuzzy-Regler 500 wiederum entsprechend dem ersten, zweiten und dritten Fuzzy-Regler 200, 300 und 400 entweder einkanalig oder mehrkanalig aufgebaut sein. Infolgedessen kann an den vierten Fuzzy-Regler 500 eine Anzahl von N Software-Anwendungen sukzessive und also jeweils nacheinander am selben Verarbeitungskanal angeschaltet werden.

Gemäß der in Figur 8 gezeigten, bevorzugten Ausführungsform der Erfindung stellt der vierte Fuzzy-Regler 500 zweckmäßig für jede angeschaltete Software-Anwendung 10-1 bis 10-N einen Verarbeitungskanal zur Verfügung, so dass für einen N-kanalig ausgelegten vierten Fuzzy-Regler 500 eine Anzahl von N Software-Anwendungen gemeinsam, d.h. parallel angeschaltet werden können, weshalb der vierte Fuzzy-Regler auch eine entsprechende Anzahl von Ausgängen A500-1 bis A500-N aufweist. Entsprechend ist jede der ausgewählten Software-Anwendungen 10-1 bis 10-N mit jeweils einem Kanal des vierten Fuzzy-Reglers 500 verbunden.

Erfindungsgemäß ist der vierte Fuzzy-Regler 500 ausgebildet, für jede ausgewählte Software-Anwendung 10-1 bis 10-N in Abhängigkeit von deren momentanen Ressourcenauslastungswert VM-1 bis VM-N des ersten Fuzzy-Reglers 200, von deren Relevanzwert RV-1 bis RV-N, deren Kritikalitätswert CV-1 bis CV-N und einer Nutzung bzw. Auslastung der Systemkapazität für die Gruppe von Software-Anwendungen jeweils einen Skalierungswert SV-1 bis SV-N zu ermitteln, mit dem Kriterium, dass die Nutzung durch die Software-Anwendungen 10-1 bis 10-N der Gruppe einen einstellbaren Schwellwert nicht überschreitet.

Hierzu werden die, bevorzugt von der Fuzzy-basierten Vorrichtung 200 ausgewählten, höchsten momentanen Ressourcenauslastungswerte VM-1 bis VM-N der Ausgänge A200-1 bis A200-N (vgl. Figur 5), die Relevanzwerte RV-1 bis RV-N der Ausgänge A300-1 bis A300-N der Fuzzy-basierten Vorrichtung 300 (vgl. Figur 6) und die Kritikalitätswerte CV-1 bis CV-N der Ausgänge A400-1 bis A400-N der Fuzzy-basierten Vorrichtung 400 (vgl. Figur 7) an Inferenzeinrichtungen 520-1 bis 520-N des vierten Fuzzy-Reglers 500 übergeben.

Aus Gründen der Übersichtlichkeit wird nachfolgend von einer parallelen Anschaltung der Software-Anwendungen an die Kanäle des vierten Fuzzy-Reglers 500 ausgegangen und lediglich der Aufbau eines vierten Fuzzy-Reglers 500 für den Kanal 1 beschrieben.

Es sei somit darauf hingewiesen, dass gemäß der bevorzugten Ausführungsform des erfindungsgemäßen Fuzzy-Regelsystems und des erfindungsgemäßen Verfahrens nach Figur 8 die Ausgangswerte VM-1, RV-1 und CV-1 der Fuzzy-Regler 200, 300 und 400 direkt als Eingangswerte in eine Inferenzeinrichtung 520-1 des vierten Fuzzy-Reglers 500 zugeführt werden, ohne dass diese eine Fuzzifizierungseinrichtung passieren.

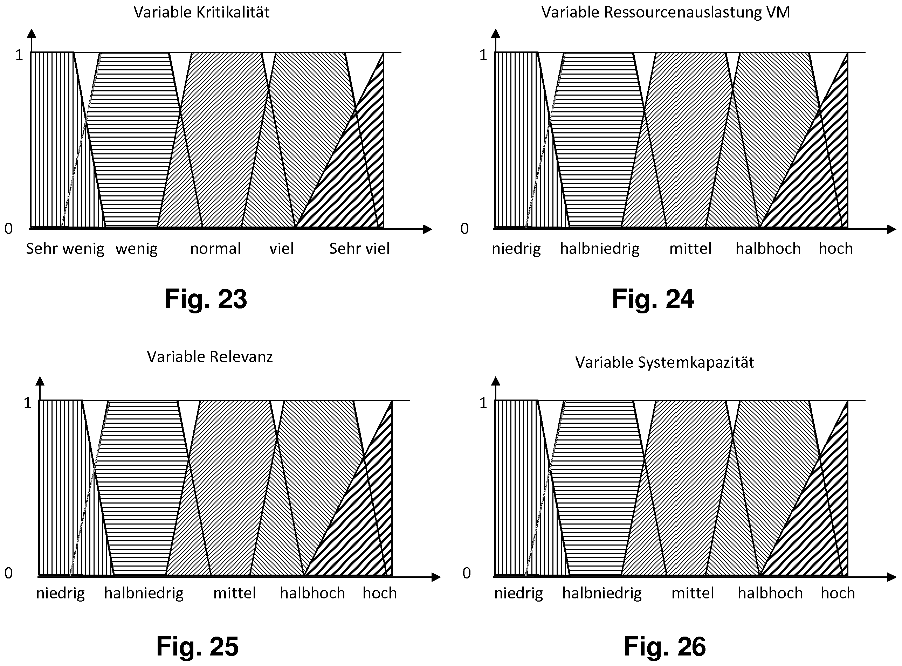

Wie bereits oben erwähnt kann jedoch in einer Ausführungsform der Erfindung ein vierter Fuzzy-Regler 500 auch Fuzzifizierungseinrichtungen zur Fuzzifizierung der Ausgangswerte VM-1 bis VM-N, RV-1 bis RV-N und CV-1 bis CV-N der Fuzzy-Regler 200, 300 und 400 aufweisen, wobei insbesondere in diesem Fall diese Fuzzifizierungseinrichtungen beispielhafte Fuzzy-Sets gemäß der Figuren 23 bis 25 auswerten und hieraus die Werte für die entsprechenden Klassenzugehörigkeiten bestimmen. Es sei weiter erwähnt, dass bei einer derartigen Ausführungsform der Erfindung die als Fuzzy-Regler 200 bis 400 ausgebildeten Fuzzy-Vorrichtungen 200 bis 400 vorzugsweise Defuzzifizierungseinrichtungen aufweisen können, so dass deren Ausgangswerte defuzzifiziert sind.

Die Nutzung bzw. die Auslastung der Systemkapazität, das heißt die Nutzung aller Ressourcen durch alle ausgewählten Software-Anwendungen 10-1 bis 10-N der Gruppe, wird bevorzugt mit einer Systemkapazitäts-Messeinrichtung 51 ermittelt, wobei hierzu insbesondere die Nutzung jeder Ressource jeder Software-Anwendung erfasst wird. Eine derartige Systemkapazitäts-Messeinrichtung 51 kann zweckmäßig den Ressourcenmessern 21-1 bis 28-N des ersten Fuzzy-Reglers 200 entsprechen.

Hierzu kann die Messeinrichtung 51 mit allen Software-Anwendungen direkt verbunden sein oder aber mit den, den einzelnen Software-Anwendungen jeweils zugeordneten Messeinrichtungen oder aber an zentraler Stelle, beispielsweise einer Systemüberwachung für die Gruppe von Software-Anwendungen angeschaltet sein.
Die von der Messeinrichtung 51 ermittelte Systemkapazität 51 wird somit einer Fuzzifizierungseinrichtung 510 übergeben. Zur Fuzzy-basierten Verarbeitung in der Fuzzy-basierten Vorrichtung 500 sind zur Beschreibung einer linguistischen Variablen "Systemkapazität" entsprechend wiederum für die Software-Anwendungen 10-1 bis 10-N der Gruppe zugeordnete Fuzzy-Sets hinterlegt, die bevorzugt gemäß der Figur 26 aufgebaut sind, und auf welche der Fuzzy-Regler 500 entsprechend einer internen Reglerverschaltung zurückgreifen kann. Anschließend wird die von der Fuzzifizierungseinrichtung 510 fuzzifizierte Ausgangsgröße an die Inferenzeinrichtung 520-1 übergeben.

Die Fuzzy-basierte Vorrichtung 500 identifiziert insbesondere hierauf basierend die, vorzugsweise von der Fuzzy-basierten Vorrichtung 200 ausgewählten, Software-Anwendungen zu einem nachfolgenden Verarbeitungsschritt zur Durchführung einer Inferenz.

Diese Identifizierung erfolgt bevorzugt in einem frühen Schritt. Wurde also bereits von der Fuzzy-basierten Vorrichtung 200 die Software-Anwendung 10-1 als ausgewählte Software-Anwendung ausgewählt, so kann es beispielsweise ausreichend sein, lediglich den damit verbundenen Kanal 1 des vierten Fuzzy-Reglers 500 gemäß Figur 8 aktiv zu betreiben, nicht jedoch weitere Messeinrichtungen und/oder Kanäle. Insofern werden bevorzugt lediglich diejenigen Kanäle der vierten Fuzzy-basierten Vorrichtung 500 aktiv betrieben werden, die mit der wenigstens einen ausgewählten Software-Anwendung verbunden sind.

Ferner kann es ebenfalls ausreichend sein, lediglich diejenigen Kanäle der zweiten und dritten Fuzzy-basierten Vorrichtung 300 und 400 aktiv zu betreiben, die mit den ausgewählten Software-Anwendungen verbunden sind.

In einer weiteren Ausführungsform der Erfindung, bei der anstelle von der ersten Fuzzy-basierten Vorrichtung 200 die vierte Fuzzy-basierte Vorrichtung 500 eine Auswahleinrichtung 291 umfasst, erfolgt die Auswahl bzw. die Identifizierung einer ausgewählten Software-Anwendung durch die vierte Fuzzy-basierte Vorrichtung 500, vorzugsweise erst in einem späteren Schritt. Gemäß einer derartigen Ausführungsform der Erfindung wird somit die durch die Systemkapazitäts-Messeinrichtung 51 ermittelte Systemkapazität bevorzugt in identischer Weise an alle Kanäle der vierten Fuzzy-basierten Vorrichtung 500 übergeben, wobei die Auswahl bzw. die Identifizierung insbesondere innerhalb der Inferenzeinrichtung 520-1 für Kanal 1 und in entsprechender Weise in den Inferenzeinrichtungen der weiteren Kanäle für weitere Software-Anwendungen erfolgt.

In der Inferenzeinrichtung 520-1 erfolgt eine Gewichtung entsprechend den dort festgelegten Regeln für die Berechnung der zu der Software-Anwendung 10-1 gehörenden Ausgabe.

Die Ausgangsgröße der Inferenzeinrichtung 520-1 des Kanals 1 des vierten Fuzzy-Reglers 500 wird daraufhin einer Defuzzifizierungseinrichtung 530-1 übergeben, die einen Skalierungswert SV-1 für eine ausgewählte Software-Anwendung 10-1 ermittelt, mit dem Kriterium, dass die Auslastung bzw. Nutzung aller Ressourcen VM-1 bis VM-N, das heißt die Nutzung der Systemkapazität durch alle Software-Anwendungen 10-1 bis 10-N der Gruppe, einen einstellbaren Schwellwert nicht überschreitet.

Entsprechend erfolgen in Bezug auf die weiteren Kanäle in den dortigen, in den Figuren jedoch nicht dargestellten Inferenzeinrichtungen Gewichtungen entsprechend den dort festgelegten Regeln für die Berechnungen der zu den weiteren Software-Anwendungen bis 10-N gehörenden Ausgaben. Die Ausgangsgrößen dieser Inferenzeinrichtungen der weiteren Kanäle des vierten Fuzzy-Reglers 500 werden daraufhin gleichermaßen einer jeweiligen Defuzzifizierungseinrichtung übergeben, die entsprechend weitere Skalierungswerte bis SV-N für jeweils weitere ausgewählte Software-Anwendungen bis 10-N ermitteln.

Ein solcher Skalierungswert SV-1 für die Software-Anwendung 10-1, und SV-2 bis SV-N entsprechend für die weiteren Kanäle, beeinflusst beispielsweise die Notwendigkeit des Zeitpunkts der Zuordnung von Ressourcen zu Software-Anwendungen, des Einschaltens und/oder oder des Ausschaltens von, insbesondere nicht benötigten, virtuellen Maschinen, so dass hierüber die Ressourcenzuordnung zu Software-Anwendung regelbar und infolge dessen auch die Zuordnung der Ressourcen des Systems zu der Gruppe der Software-Anwendungen geregelt wird.

Ist also beispielsweise die Software-Anwendung 10-1 eine Webanwendung, können beispielsweise basierend auf dem Skalierungswert SV-1 zweckmäßig weitere virtuelle Maschinen zugeordnet werden, um Nutzeranforderungen von Nutzern der Software-Anwendung bzw. von virtuellen Maschinen, auf welchen diese Software-Anwendungen betrieben werden, bei Nutzungsspitzen gerecht zu werden.

Zweckmäßig wird der Fuzzy-basierten Vorrichtung 500 ein Relevanzwert RV-1 des zweiten Fuzzy-Reglers 300 und ein Kritikalitätswert CV-1 des dritten Fuzzy-Reglers 400 einer Software-Anwendung 10-1 parallel zu einem fuzzifizierten momentanen Ressourcenauslastungswert VM-1 der Inferenzeinrichtung 520-1 zugeführt. Für weitere Kanäle bzw. Software-Anwendungen gilt dies ebenso.

Mit dem vorstehend beschriebenen erfindungsgemäßen Fuzzy-Regelsystem ist somit ein erfindungsgemäßes Verfahren zur Regelung der Ressourcenzuordnung zu einer oder mehreren Software-Anwendungen, welche eine Gruppe bilden, durchführbar.

In weiterer zweckmäßiger Ausführungsform des erfindungsgemäßen Verfahrens, welches mit einer weiteren zweckmäßigen Ausführungsform eines erfindungsgemäßen Systems durchgeführt werden kann, kann auch eine Auswahl wenigstens einer Softwareanwendung durch eine Auswahleinrichtung zusätzlich oder alternativ, insbesondere wenn basierend auf den momentanen Ressourcenauslastungswert zunächst alle ausgewählt werden, in Abhängigkeit mit einem höchsten Relevanzwert und/oder Kritikalitätswert, welche durch eine zweite und/oder dritte Fuzzy-basierte Vorrichtung 200 und/oder 300 ausgewählt wird, und ferner ein Skalierungswert zumindest für wenigstens eine dieser ausgewählten Software-Anwendungen ermittelt werden, insbesondere derart, dass die bereitgestellte Infrastruktur dem Leistungsbedarf entspricht.

Zusammenfassend ermöglicht die Erfindung somit eine Optimierung der Ressourcen-Zuordnung einer oder mehrerer Software-Anwendungen, insbesondere in einem Netzwerk, wie in einer Computer Cloud, nach verschiedenen, konkurrierenden Parametern und kann in Folge der Beschreibung von im Wesentlichen allen Eingangswerten in Art von linguistischen Variablen auch verschiedene Kommunikationsprotokolle der jeweiligen Software-Anwendungen berücksichtigen. Die Kenntnis der verschiedenen Lastparameter, der Kritikalität der einzelnen Software-Anwendungen etc. ermöglicht quasi eine dynamische Skalierung, also ein flexibles Kombinieren und Anpassen einer oder mehrerer Software-Anwendungen in Bezug auf deren Ressourcennutzung bzw. in Abhängigkeit deren Anforderungen und kann sich entsprechend der jeweiligen Nutzungssituation oder eines erkannten Nutzungsprofils ändern. Das flexible Kombinieren und Anpassen von Ressourcen erfolgt in verschiedenen Stufen und wird zweckmäßig zyklisch und/oder bei Bedarf wiederholt. So kann jederzeit ein Optimum auch bei veränderten Umgebungsbedingungen erreicht werden. Hierdurch lassen sich z.B. in einem intelligenten Netzwerk die Ressourcen-Nutzungen senken und Lastspitzen reduzieren oder vermeiden, wobei diese vorausschauend erkannt und/oder durch Bereitstellung entsprechenden Ressourcen eine Überlastung eines Netzwerks vermieden werden kann.

Eine wesentliche Voraussetzung hierfür ist eine Fuzzy-basierte Regelung mit linguistischen Variablen, die Fuzzy-Sets enthalten, die zweckmäßig vorkonfiguriert werden und für welche Beispiele in den Fig. 9 bis 27 gezeigt sind. Diese Fuzzy-Sets können somit insbesondere die Form eines Dreiecks, Trapezes oder eines Kurvenstücks (vgl. auch Patentschrift DE 195 02 230 A1) annehmen.

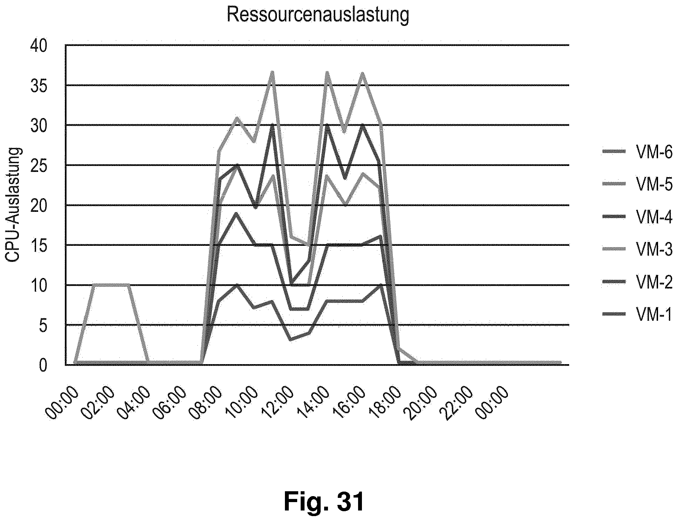

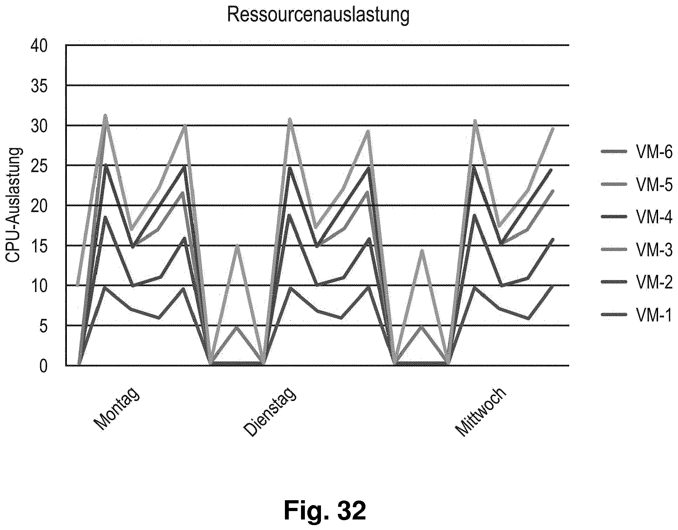

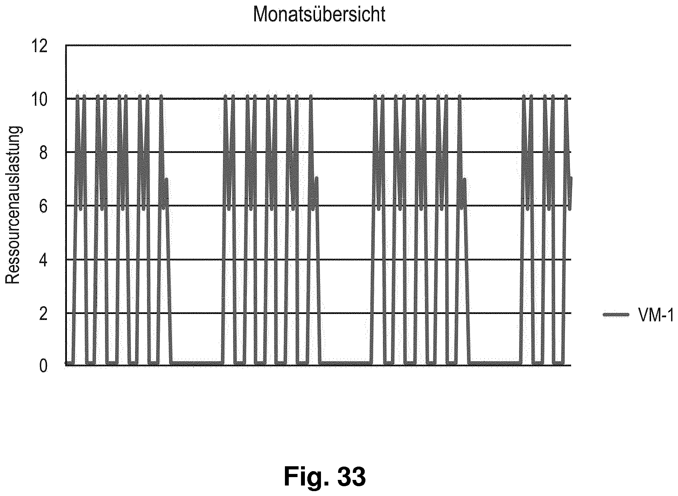

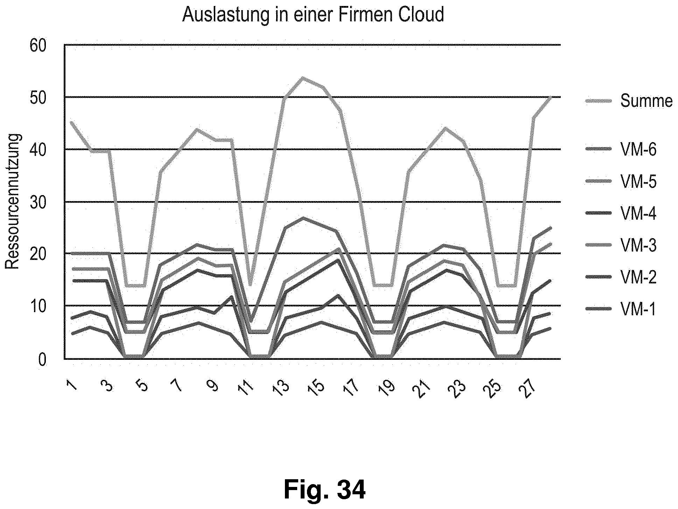

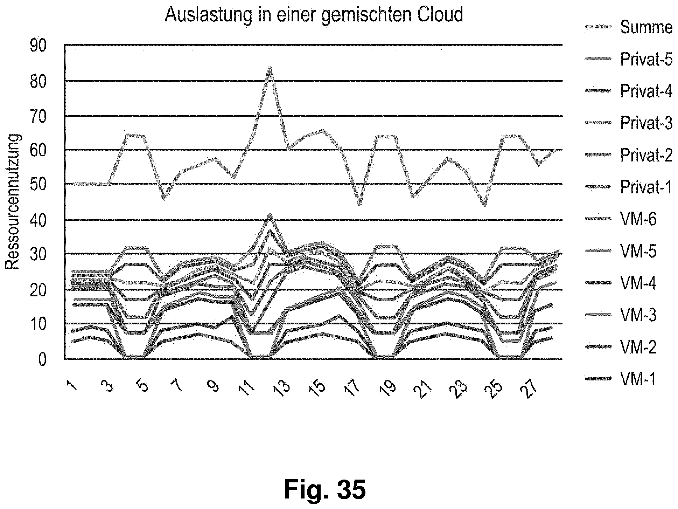

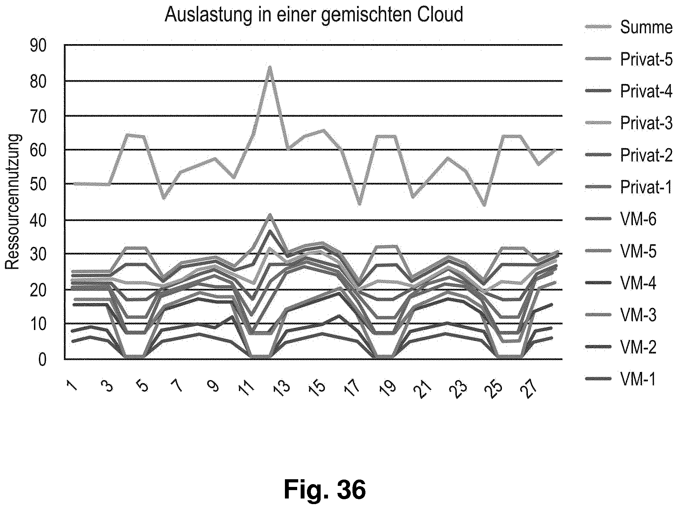

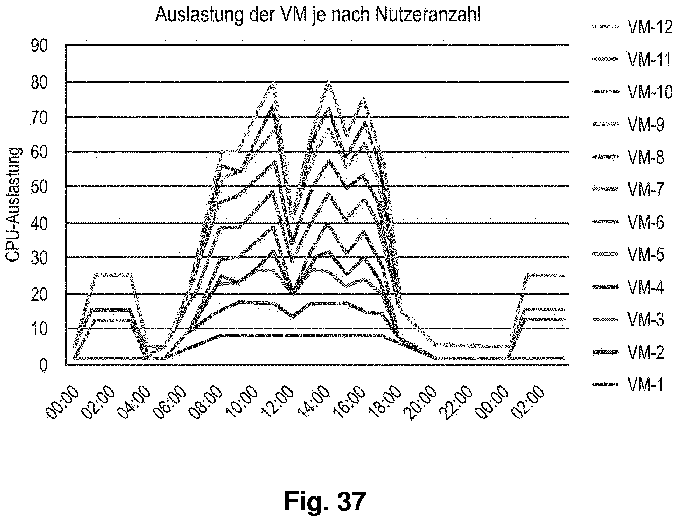

Diese linguistischen Variablen werden in mehreren Fuzzy-Vorrichtungen miteinander verknüpft und zweckmäßig wird nur bei Bedarf in das System eingegriffen, um die Überschreitung eines gewählten Schwellwertes zu verhindern. Hierzu werden, basierend auf eingangs angeführter Definition, dass ein hoher Kritikalitätswert somit zweckmäßig einen Skalierungswert erhöht und ein niedriger Relevanzwert diesen verringert, zweckmäßig zumindest einer oder mehreren Software-Anwendungen je nach Relevanz und/oder Kritikalität sowie einem hohem Ressourcenbedarf weitere Ressourcen zugeordnet, so dass die Funktionalität für den Nutzer erhalten bleibt. Zweckmäßig werden hierzu ferner Nutzungsverhaltensprofile erstellt und abgespeichert, welche z.B. die Ressourcen-Nutzung pro Zeit protokollieren und damit typische Lastspitzen voraussagen können. Solche Nutzungsprofile können z.B. gemäß den Figuren 31 bis 37 abgespeichert sein.

Infolgedessen kann in einer weiteren bevorzugten Ausführungsform eines erfindungsgemäßen Fuzzy-Regelsystems die zweite Fuzzy-basierten Vorrichtung einen Speicher aufweisen, in welchem vorbestimmte zeitliche Nutzungsverhaltensprofile gespeichert sind, wobei die zweite Fuzzy-basierte Vorrichtung dazu ausgebildet ist, unter Ansprechen auf die zu vorbestimmten Zeitpunkten ermittelte Ressourcen-Nutzung ein vorbestimmtes Nutzungsverhaltensprofil zu erkennen. Auch dieser Speicher ist in den Figuren aus Gründen der Übersichtlichkeit nicht dargestellt. Solche Nutzungsverhaltensprofile über der Zeit können beispielsweise gemäß der Figuren 31 bis 37 für verschiedene Software-Anwendungen, die insbesondere auf verschiedenen virtuellen Maschinen betrieben werden, gespeichert werden.

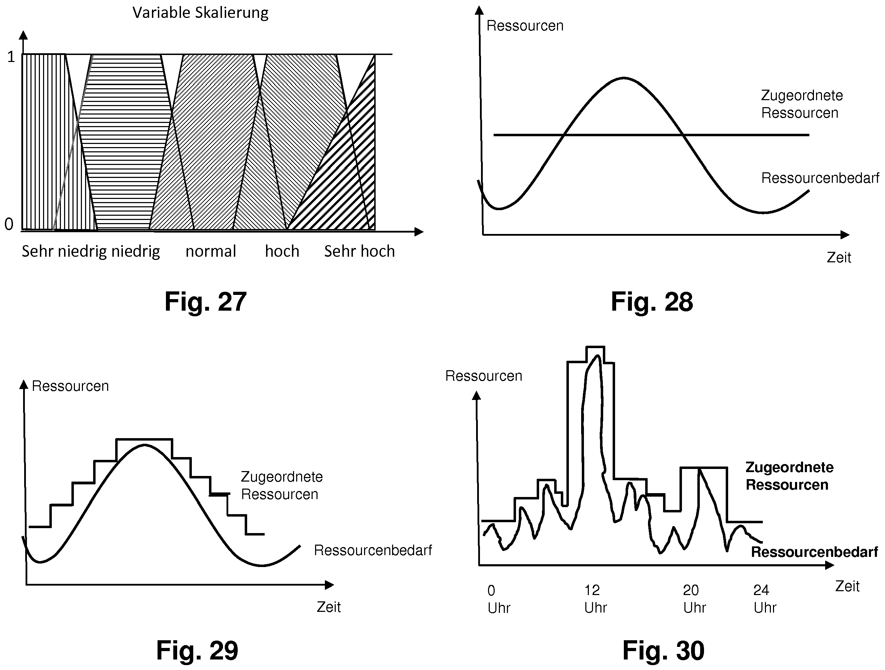

Figur 28 zeigt den zeitlichen Verlauf der Nutzung der Ressourcen einer konventionellen Infrastruktur nach dem Stand der Technik, insbesondere durch eine Gruppe von Software-Anwendungen. Wenn die der Gruppe zugeordneten Ressourcen konstant sind, treten zeitweise Überlastungen einer derartigen Infrastruktur auf, weil zu wenig Ressourcen zugeordnet sind.

Figur 29 zeigt den zeitlichen Verlauf an zugeordneten Ressourcen einer Infrastruktur, insbesondere eine Gruppe von Software-Anwendungen, gegenüber dem Ressourcenbedarf bzw. der aktuellen Ressourcennutzung durch diese Infrastruktur, unter Anwendung eines erfindungsgemäßen Fuzzy-basierten Verfahrens und Fuzzy-Regelsystems.

Figur 29 zeigt, dass es durch Zuordnen von zusätzlichen Ressourcen ermöglicht wird, eine Überlastung der Infrastruktur zu vermeiden. Figur 29 zeigt ferner, dass Ressourcen wieder abgezogen werden, wenn die Ressourcen-Nutzung durch die Gruppe der Software-Anwendungen gering ist bzw. wird.

Figur 30 zeigt den zeitlichen Verlauf an zugeordneten Ressourcen zu einer Gruppe von Software-Anwendungen gegenüber einem über den Tagesverlauf häufig wechselnden Ressourcenbedarf bzw. Ressourcennutzung, wobei eine zweite Fuzzy-basierte Vorrichtung 300 beispielsweise dazu ausgebildet ist, einen Relevanzwert in Abhängigkeit von einem gespeicherten täglichen Nutzungsprofil zu ermitteln, so dass die dynamische Zuordnung von Ressourcen dem Ressourcenbedarf entspricht, zumindest jedoch optimiert angenähert ist.

Die Erfindung ermöglicht somit eine automatische, adaptive Regelung der Ressourcen-Nutzung auf Grundlage der momentanen Verbrauchs- bzw. Nutzungswerte von Ressourcen, insbesondere innerhalb einer intelligenten Netzwerksteuerung, bei welcher die Regelung für verschiedene wiederkehrende Szenarien optimiert werden kann und zweckmäßig nur dann regulierend eingreift, wenn die Zielfunktion, also z.B. den Schwellwert nicht zu überschreiten, nicht erfüllt werden kann.

Zweckmäßig wird somit gemäß der Erfindung das reale System, insbesondere ständig oder zu vorgegebenen Zeitpunkten, beobachtet. Da davon ausgegangen werden kann, dass das reale System meistens die Zielfunktion ohne Regelung erfüllt, wird bevorzugt nur in Fällen des Überschreitens eines einstellbaren Schwellwerts regelnd in das System eingegriffen. Die Messwerte werden zweckmäßig ferner statistisch ausgewertet und bevorzugt verschiedenen Szenarien zugeordnet. Hierbei können die Nutzer das System ferner durch weitere Zielvorgaben unterstützen. Sobald Abweichungen der aktuellen Messwerte zu hinterlegten Werten erkannt werden, kann der Regler bevorzugt entsprechend angepasst werden.

Zusammenfassend ist folglich festzuhalten, dass eine erfindungsgemäße Fuzzy-basierte Regelung und ein erfindungsgemäßes Fuzzy-Regelsystem gegenüber herkömmlichen Regelverfahren und Systemen die Vorteile hat, dass ein Schwingen um einen Idealwert verhindert oder zumindest vermindert ist, dass Ressourcen eines Systems nicht verschwendet werden, dass eine Überlast des Systems durch rechtzeitiges Bereitstellen von zusätzlichen Ressourcen vermieden wird und, dass die Zielfunktionen geändert werden, z.B. wenn Software-Anwendungen zu verschiedenen Zeiten unterschiedliche Prioritäten aufweisen. Infolgedessen optimiert ein erfindungsgemäßes Fuzzybasiertes Verfahren bzw. ein erfindungsgemäßes Fuzzy-Regelsystem die Stabilität des Systems hinsichtlich der eingangs erwähnten Problematik des Schwingens um einen Idealwert, insbesondere dann, wenn besondere Anforderungen an das System gestellt werden, beispielsweise beim Auftreten von nicht erwarteten Lastspitzen zu bestimmten Zeitpunkten oder Situationen. Diesbezüglich sei auch erwähnt, dass hierfür insbesondere eine Gruppierung von Software-Anwendungen zu einer Gruppe von Software-Anwendungen von besonderem Vorteil ist und, dass ein erfindungsgemäßes Verfahren bzw. Regelsystem weniger Reaktionszeit benötigt und die Funktionsfähigkeit des Systems auch bei gleichzeitiger Bereitstellung von weniger Ressourcen sichert.

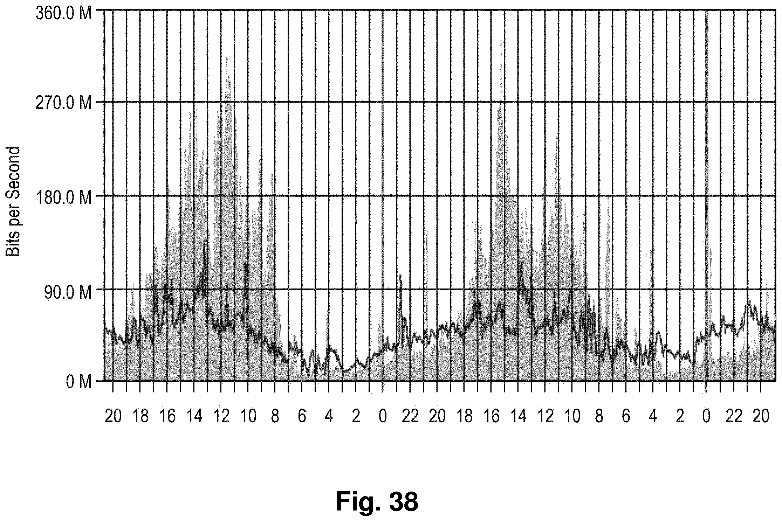

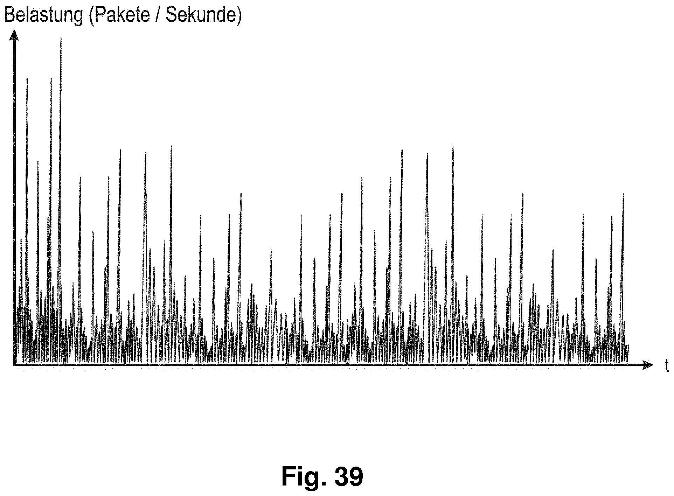

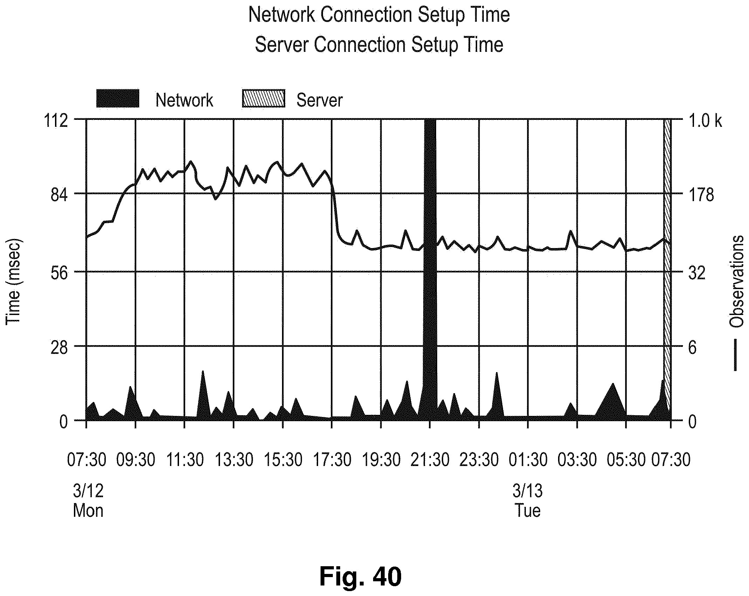

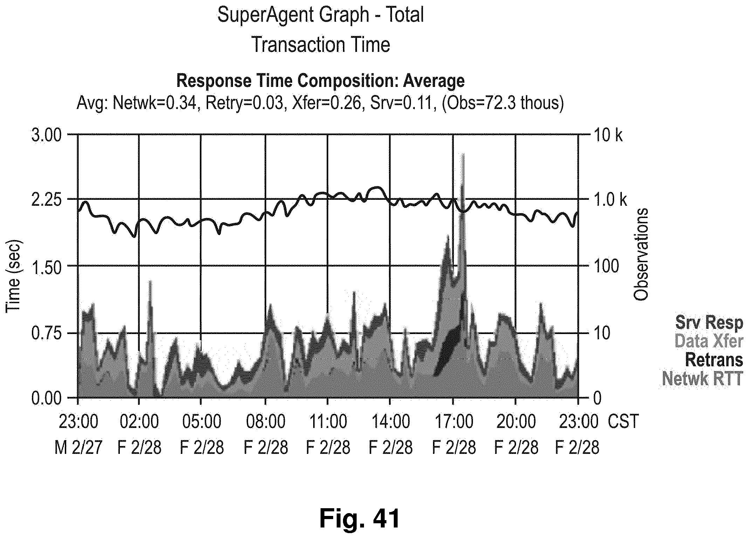

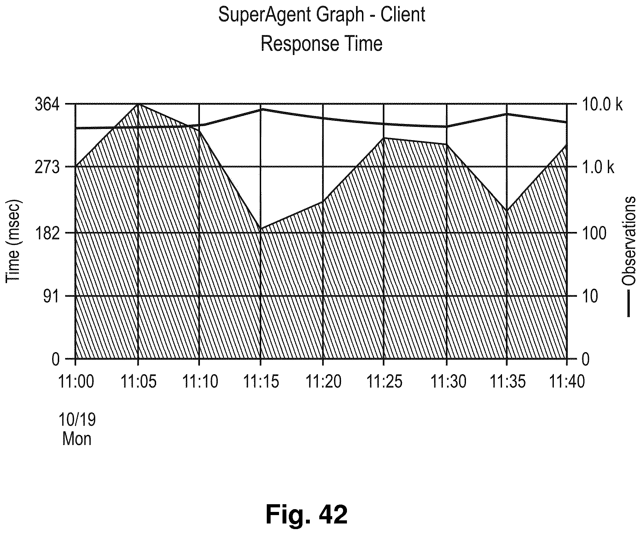

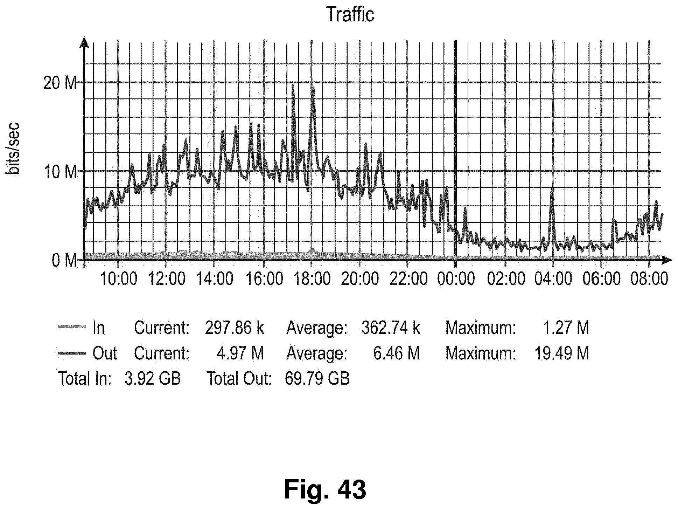

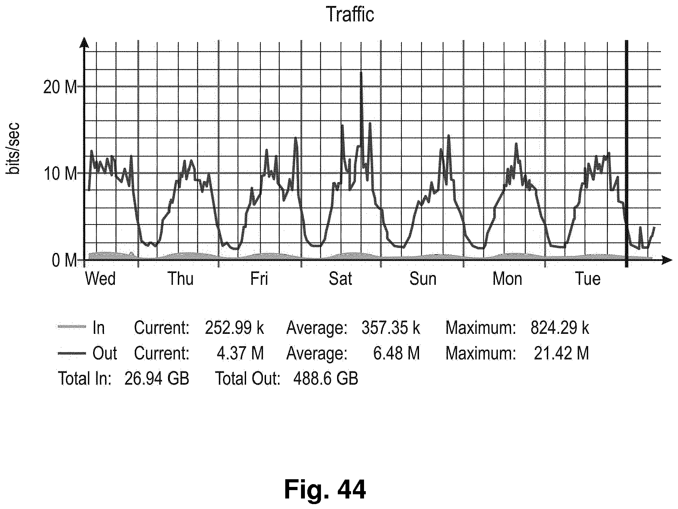

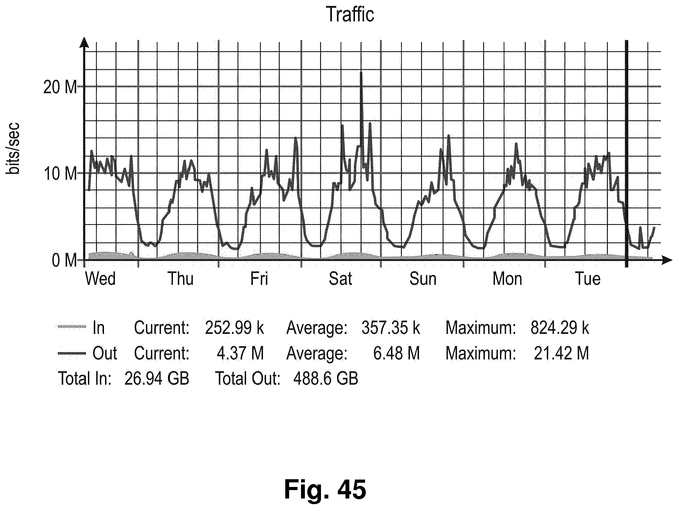

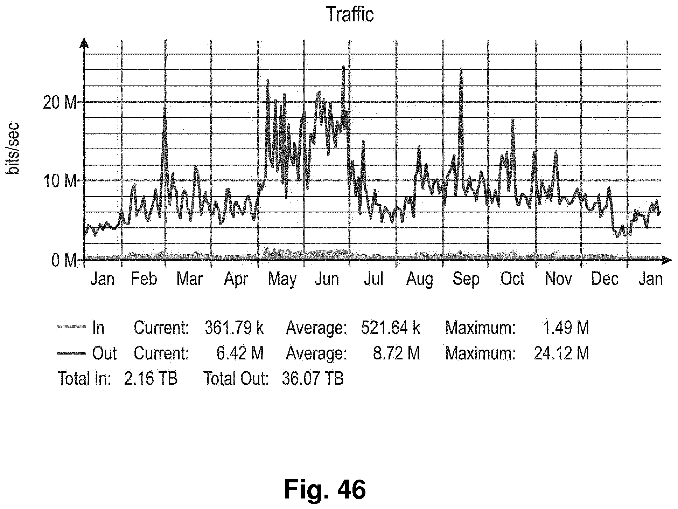

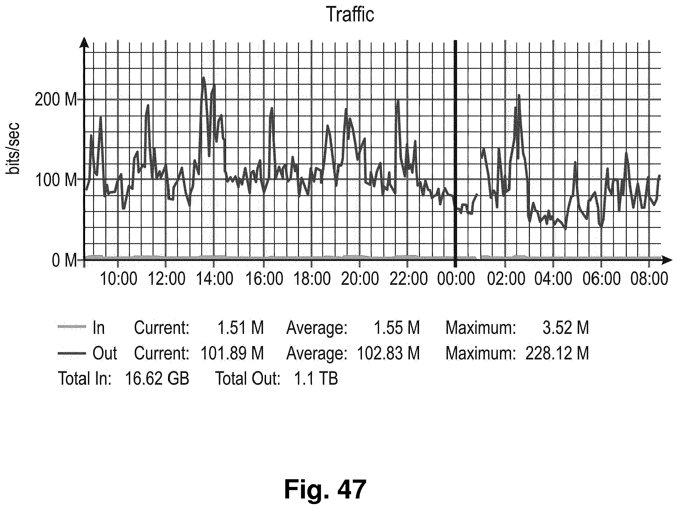

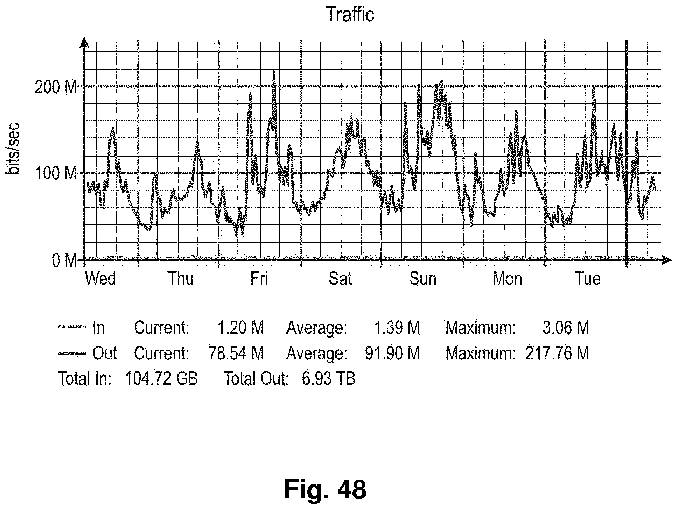

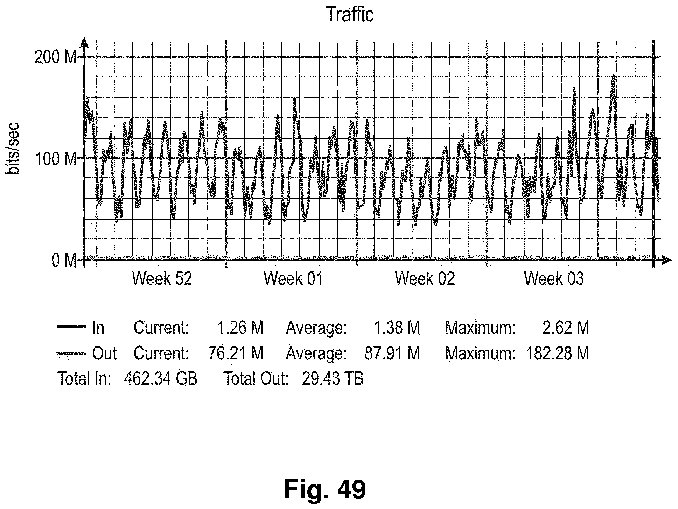

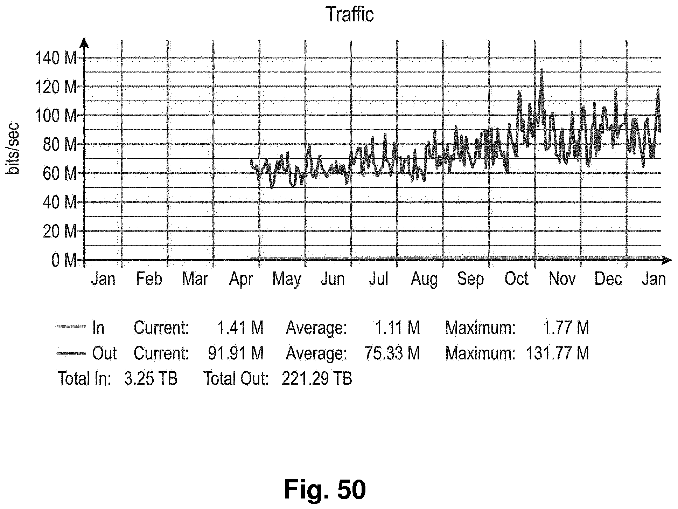

Die Fign. 38-50 zeigen nochmals weitere Messdiagramme beispielhafter Ressourcen-Nutzungen basierend auf dem Datenverkehr einzelner Software-Anwendungen über die Zeit.

## Patentansprüche

1. Verfahren zur Fuzzy-basierten Regelung der Zuordnung von Ressourcen eines Systems, insbesondere eines IT-Netzwerks, zu einer oder mehreren Software-Anwendungen (10-1, ...10-N) aus einer Anzahl von N Software-Anwendungen, die eine Gruppe bilden, mit folgenden Schritten:
- Messen für jede Ressource einer aktuellen Ressourcen-Nutzung (21-1, .. 28-N) durch jede der Software-Anwendungen (10-1, ...10-N) der Gruppe;
- Ermitteln mit einer ersten Fuzzy-basierten Vorrichtung (200) eines momentanen Ressourcenauslastungswertes VM (VM-1, ...VM-N) für jede Software-Anwendung (10-1, ...10-N) der Gruppe in Abhängigkeit von deren aktuellen Ressourcen-Nutzungen (21-1, .. 28-N) jeder Ressource;
- Auswählen mit einer Auswahleinrichtung (291) wenigstens einer Softwareanwendung mit einem höchsten momentanen Ressourcenauslastungswert (VM-1, ...VM-N) ;
- Ermitteln mit einer vierten Fuzzy-basierten Vorrichtung (500) eines Skalierungswertes (SV-1, ..SV-N) zumindest für jede ausgewählte Software-Anwendung in Abhängigkeit von deren momentanen Ressourcenauslastungswert VM (VM-1, ..VM-N), von einem mit einer zweiten Fuzzy-basierten Vorrichtung (300) ermittelten Relevanzwert (RV-1, .. RV-N) und von einem mit einer dritten Fuzzy-basierten Vorrichtung (400) ermittelten Kritikalitätswert (CV-1, .. CV-N) der ausgewählten Software-Anwendungen und einer Systemkapazität für die Gruppe,
mit dem Kriterium, dass die Nutzung aller Ressourcen durch alle Software-Anwendungen (10-1, ...10-N) der Gruppe einen einstellbaren Schwellwert nicht überschreitet.

2. Fuzzy-Regelsystem zur Regelung der Zuordnung von Ressourcen eines Systems, insbesondere eines IT-Netzwerks, zu einer oder mehrerer Software-Anwendungen (10-1, ...10-N aus einer Anzahl von N Software-Anwendungen,), die eine Gruppe bilden, mit
- einer ersten Fuzzy-basierten Vorrichtung (200), die dazu ausgebildet ist, für jede Software-Anwendung (10-1, ...10-N) in Abhängigkeit von einer Messung für jede Ressource einer aktuellen Ressourcen-Nutzung (21-1, .. 28-N) durch jede der Software-Anwendungen (10-1, ...10-N) der Gruppe, insbesondere in Abhängigkeit von einem CPU-Wert, einem CPU-Delta-Wert, einem RAM-Wert, einem RAM-Delta-Wert, einem HDD-Wert, einem HDD-Delta-Wert, einem Netzwerk-Wert und/oder einem Netzwerk-Delta-Wert, eine momentane Ressourcenauslastungswert (VM-1,...VM-N) zu ermitteln, wobei das Fuzzy-Regelsystem eine Auswahleinrichtung (291) umfasst, um wenigstens eine Software-Anwendung mit einem höchsten momentanen Ressourcenauslastungswert (VM-1, ...VM-N) auszuwählen,
- einer zweiten Fuzzy-basierten Vorrichtung (300), die dazu ausgebildet ist, für jede Software-Anwendung (10-1, ...10-N) in Abhängigkeit von einem Nutzungsverhalten, insbesondere von der Uhrzeit, einem Tagesnutzungsprofil und/oder einem Wochennutzungsprofil einen Relevanzwert (RV-1,..RV-N) zu ermitteln,
- einer dritten Fuzzy-basierten Vorrichtung (400), die dazu ausgebildet ist, zumindest für die eine ausgewählte Software-Anwendung in Abhängigkeit von einem dazugehörenden Prioritätswert und von einem Sicherheitsrelevanzwert einen Kritikalitätswert (CV-1, .. CV-N) zu ermitteln,
und einer vierten Fuzzy-basierten Vorrichtung (500), die dazu ausgebildet ist, aus den momentanen Ressourcenauslastungswerten (VM-1, ..VM-N) der ausgewählten Software-Anwendungen (10-1, ...10-N), dem Relevanzwert der ausgewählten. Software-Anwendungen (10-1, ...10-N), dem Kritikalitätswert (CV-1, ...CV-N) der ausgewählten Software-Anwendungen (10-1, ...10-N), und der Systemkapazität (51) für die Gruppe einen Skalierungswert (SV-1, ...SV-N) zumindest für ausgewählte Software-Anwendungen der Gruppe zu ermitteln, mit dem Kriterium, dass die Nutzung aller Ressourcen durch alle Software-Anwendungen (10-1, ...10-N) der Gruppe einen einstellbaren Schwellwert nicht überschreitet.

3. Fuzzy-Regelsystem nach vorstehendem Anspruch, wobei die zweite Fuzzy-basierten Vorrichtung (300) einen Speicher aufweist, in welchem vorbestimmte zeitliche Nutzungsverhaltensprofile gespeichert sind, wobei die zweite Fuzzy-basierte Vorrichtung (300) dazu ausgebildet ist, unter Ansprechen auf die zu vorbestimmten Zeitpunkten ermittelte Ressourcen-Nutzung ein vorbestimmtes Nutzungsverhaltensprofil zu erkennen.

4. Fuzzy-Regelsystem nach einem der vorstehenden Ansprüche 2 bis 3, wobei die erste Fuzzy-basierte Vorrichtung (200) als ein erster Fuzzy-Regler (200) ausgebildet ist, und die zweite Fuzzy-basierte Vorrichtung (300) als ein zweiter Fuzzy-Regler (300) ausgebildet ist, und die dritte Fuzzy-basierte Vorrichtung (400) als ein dritter Fuzzy-Regler (400) ausgebildet ist, und der erster Fuzzy-Regler (200), der zweite Fuzzy-Regler und der dritte Fuzzy-Regler ausgangsseitig mit dem vierten Fuzzy-Regler (500) verbunden sind.

## Revendications

1. Procédé de régulation basée sur la logique floue de l'affectation de ressources d'un système, en particulier d'un réseau IT, à une ou plusieurs applications logicielles (10-1, ...10-N) faisant partie d'un nombre de N applications logicielles, qui forment un groupe, comprenant les étapes suivantes :
- la mesure pour chaque ressource d'une exploitation actuelle de ressource (21-1, .. 28-N) par chacune des applications logicielles (10-1, ...10-N) du groupe ;
- la détermination, au moyen d'un premier dispositif basé sur la logique floue (200), d'une valeur d'utilisation de ressource momentanée VM (VM-1, ...VM-N) pour chaque application logicielle (10-1, ...10-N) du groupe en fonction des exploitations actuelles de ressource (21-1, .. 28-N), de ladite application, de chaque ressource ;
- la sélection, au moyen d'un dispositif de sélection (291), d'au moins une application logicielle présentant une valeur d'utilisation de ressource momentanée (VM-1, ...VM-N) maximale ;
- la détermination, au moyen d'un quatrième dispositif basé sur la logique floue (500), d'une valeur de graduation (SV-1,..SV-N) au moins pour chaque application logicielle sélectionnée en fonction de la valeur d'utilisation de ressource momentanée VM (VM-1, ...VM-N) de celle-ci, d'une valeur de pertinence (RV-1, .. RV-N) déterminée au moyen d'un deuxième dispositif basé sur la logique floue (300) et d'une valeur de criticité (CV-1, .. CV-N), déterminée au moyen d'un troisième dispositif basé sur la logique floue (400), des applications logicielles sélectionnées et d'une capacité de système pour le groupe,
à la condition que l'exploitation de toutes les ressources par toutes les applications logicielles (10-1, ...10-N) du groupe ne dépasse pas une valeur seuil réglable.

2. Système de régulation à logique floue pour la régulation de l'affectation de ressources d'un système, en particulier d'un réseau IT, à une ou plusieurs applications logicielles (10-1, ...10-N faisant partie d'un nombre de N applications logicielles), qui forment un groupe, comprenant :
- un premier dispositif basé sur la logique floue (200), qui est conçu pour déterminer, pour chaque application logicielle (10-1, ...10-N), en fonction d'une mesure pour chaque ressource d'une exploitation actuelle de ressource (21-1, .. 28-N) par chacune des applications logicielles (10-1, ...10-N) du groupe, en particulier en fonction d'une valeur CPU, d'une valeur CPU-Delta, d'une valeur RAM, d'une valeur RAM-Delta, d'une valeur HDD, d'une valeur HDD-Delta, d'une valeur de réseau et/ou d'une valeur de réseau-Delta, une valeur d'utilisation de ressource momentanée (VM-1, ...VM-N), le système de régulation à logique floue comportant un dispositif de sélection (291), afin de sélectionner au moins une application logicielle présentant une valeur d'utilisation de ressource momentanée (VM-1,...VM-N) maximale,
- un deuxième dispositif basé sur la logique floue (300), qui est conçu pour déterminer, pour chaque application logicielle (10-1, ...10-N), en fonction d'un comportement d'exploitation, en particulier de l'heure, d'un profil d'exploitation quotidien et/ou d'un profil d'exploitation hebdomadaire, une valeur de pertinence (RV-1, .. RV-N),
- un troisième dispositif basé sur la logique floue (400), qui est conçu pour déterminer, au moins pour l'une des applications logicielles sélectionnées, en fonction d'une valeur de priorité associée et d'une valeur de pertinence de sécurité, une valeur de criticité (CV-1, .. CV-N),
et un quatrième dispositif basé sur la logique floue (500), qui est conçu pour déterminer, à partir des valeurs d'utilisation de ressource momentanées (VM-1, ...VM-N) des applications logicielles (10-1,...10-N) sélectionnées, de la valeur de pertinence des applications logicielles (10-1, ... 10-N) sélectionnées, de la valeur de criticité (CV-1, ...CV-N) des applications logicielles (10-1, ...10-N) sélectionnées, et de la capacité de système (51) pour le groupe, une valeur de graduation (SV-1, ...SV-N) au moins pour les applications logicielles sélectionnées du groupe, à la condition que l'exploitation de toutes les ressources par toutes les applications logicielles (10-1, ...10-N) du groupe ne dépasse pas une valeur seuil réglable.

3. Système de régulation à logique floue selon l'une quelconque des revendications précédentes, le deuxième dispositif basé sur la logique floue (300) comprenant une mémoire, dans laquelle des profils de comportement d'exploitation temporels prédéfinis sont stockés, le deuxième dispositif basé sur la logique floue (300) étant conçu pour repérer un profil de comportement d'exploitation prédéfini en réponse à l'exploitation de ressource déterminée aux moments prédéfinis.

4. Système de régulation à logique floue selon l'une quelconque des revendications précédentes 2 et 3, le premier dispositif basé sur la logique floue (200) étant réalisé sous la forme d'un premier régulateur à logique floue (200), et le deuxième dispositif basé sur la logique floue (300) étant réalisé sous la forme d'un deuxième régulateur à logique floue (300), et le troisième dispositif basé sur la logique floue (400) étant réalisé sous la forme d'un troisième régulateur à logique floue (400), et le premier régulateur à logique floue (200), le deuxième régulateur à logique floue et le troisième régulateur à logique floue étant reliés côté sortie au quatrième régulateur à logique floue (500).

## Claims

1. A method for fuzzy-based control of an allocation of resources of a system, in particular of an IT network, to one or more software applications (10-1, ..., 10-N) from a number N of software applications which define a set, comprising the steps of:
- measuring, for each resource, a current resource utilization (21-1, ..., 28-N) by each of the software applications (10-1, ..., 10-N) of the set;
- determining, using a first fuzzy-based device (200), an instantaneous resource utilization value VM (VM-1, ..., VM-N) for each software application (10-1, ..., 10-N) of the set as a function of the current resource utilization (21-1, ..., 28-N) thereof of each resource;
- selecting, using a selecting means (291), at least one software application with a highest instantaneous resource utilization value (VM-1, ..., VM-N) ;
- determining, using a fourth fuzzy-based device (500), a scaling value (SV-1, ..., SV-N) at least for each selected software application as a function of the instantaneous resource utilization value VM (VM-1, ..., VM-N) thereof, from a relevance value (RV-1, ..., RV-N) as determined by a second fuzzy-based device (300) and from a criticality value (CV-1, ..., CV-N) as determined by a third fuzzy-based device (400), of the selected software applications, and a system capacity for the set,
with the criterion that the utilization of all the resources by all of the software applications (10-1, ..., 10-N) of the set does not exceed an adjustable threshold value.

2. A fuzzy control system for controlling an allocation of resources of a system, in particular of an IT network, to one or more software applications (10-1, ..., 10-N) from a number N of software applications which define a set, comprising
- a first fuzzy-based device (200) which is configured for determining an instantaneous resource utilization value (VM-1, ..., VM-N) for each software application (10-1, ..., 10-N) as a function of a measurement for each resource of a current resource utilization (21-1, ..., 28-N) by each of the software applications (10-1, ..., 10-N) of the set, in particular as a function of a CPU value, a CPU delta value, a RAM value, a RAM delta value, an HDD value, an HDD delta value, a network value, and/or a network delta value, wherein the fuzzy control system comprises a selecting means (291) for selecting at least one software application with a highest instantaneous resource utilization value (VM-1, ..., VM-N);
- a second fuzzy-based device (300) which is configured for determining a relevance value (RV-1, ..., RV-N) for each software application (10-1, ..., 10-N) as a function of a utilization behaviour, in particular of the time of day, a daily utilization profile, and/or a weekly utilization profile;
- a third fuzzy-based device (400) which is configured for determining a criticality value (CV-1, ..., CV-N) at least for the one selected software application as a function of an associated priority value and a security relevance value; and
- a fourth fuzzy-based device (500) which is configured for determining a scaling value (SV-1, ..., SV-N), at least for selected software applications of the set, from the instantaneous resource utilization values (VM-1, ..., VM-N) of the selected software applications (10-1, ..., 10-N), the relevance value (RV-1, RV-N) of the selected software applications (10-1, ..., 10-N), the criticality value (CV-1, ..., CV-N) of the selected software applications (10-1, ..., 10-N), and the system capacity (51) for the set, with the criterion that the utilization of all the resources by all of the software applications (10-1, ..., 10-N) of the set does not exceed an adjustable threshold value.

3. The fuzzy control system according to the preceding claim, wherein the second fuzzy-based device (300) includes a memory which stores predefined temporal utilization behaviour profiles, wherein the second fuzzy-based device (300) is configured for identifying a predefined utilization behaviour profile in response to the resource utilization determined at predetermined points in time.

4. The fuzzy control system according to any one of the preceding claims 2 to 3, wherein the first fuzzy-based device (200) is configured as a first fuzzy controller (200), and the second fuzzy-based device (300) is configured as a second fuzzy controller (300),
and the third fuzzy-based device (400) is configured as a third fuzzy controller (400), and wherein the first fuzzy controller (200), the second fuzzy controller, and the third fuzzy controller are connected to the fourth fuzzy controller (500) at the output sides thereof.
